# EUROPEAN PATENT APPLICATION

(11) **EP 4 447 532 A1**
(43) Date of publication of application: **16.10.2024**
(21) Application number: 22918417.1
(22) Date of filing: 22.12.2022
(51) Int. Cl.: H04W 24/08

(54) **FAULT LOCATING METHOD AND APPARATUS**

(30) Priority: 07.01.2022 CN 202210016389
(71) Applicant: Huawei Technologies Co., Ltd., Shenzhen, Guangdong 518129 (CN)
(72) Inventor: CAO, Longyu, Shenzhen, Guangdong 518129 (CN); YU, Yijun, Shenzhen, Guangdong 518129 (CN)
(74) Representative: Isarpatent
(86) International application number: PCT/CN2022/141013
(87) International publication number: WO 2023/130974

(57) **Abstract**

Embodiments of this application provide a fault location method and an apparatus. The method includes: A first network element receives or determines a performance indicator that is of a service flow of a terminal device and that is associated with an exception event of the service flow. The first network element sends the performance indicator of the service flow to the terminal device. The terminal device measures the performance indicator of the service flow, and reports a measurement result of the performance indicator of the service flow to the first network element. The first network element analyzes the measurement result, to obtain a cause of the exception event of the service flow. According to the fault location method and the apparatus provided in this application, fault location analytics can be automatically performed on the terminal device, to quickly locate and handle a fault, and recover normal service provisioning. The measurement result of the performance indicator at a service flow level is collected and analyzed, so that a case in which fault demarcation cannot be performed and a case in which fault location is inaccurate are avoided, and more precise fault demarcation and location can be performed, thereby quickly handling the fault, and recovering the normal service provisioning.

## Description

This application claims priority to Chinese Patent Application No. 202210016389.3, filed with the China National Intellectual Property Administration on January 7, 2022 and entitled "FAULT LOCATION METHOD AND APPARATUS", which is incorporated herein by reference in its entirety.

### TECHNICAL FIELD

Embodiments of this application relate to the communication field, and more specifically, to a fault location method and an apparatus.

### BACKGROUND

In a mobile network, an operator, serving as a network communication service provider, is mainly responsible for network construction and routine operations and maintenance management. The network operations and maintenance management includes network operations and maintenance management functions such as configuration management, performance management, fault management, and the like, where the fault management is one of key and difficult points of network management for the operator. Currently, main functions implemented through the network fault management include fault information query, fault reporting, fault information clearing, and the like. However, after receiving network fault alarm reporting information, a network management system cannot determine a network fault point at which a fault occurs (for example, cannot determine whether a fault occurs on a network element or a link, or cannot determine whether a fault occurs on a radio access network device or a core network element device). To locate the fault, the operator usually arranges operations and maintenance management engineers to perform packet capture onsite for different network element nodes or segmented links in the network, and perform fault location analytics based on packet capture data.

### SUMMARY

Embodiments of this application provide a fault location method, to implement quick fault location, and recover normal service provisioning.

According to a first aspect, a fault location method is provided, including:
A first network element sends first indication information to a terminal device, where the first indication information indicates a performance indicator of a service flow of the terminal device, and the performance indicator of the service flow is associated with an exception event of the service flow.

The first network element receives second indication information from the terminal device, where the second indication information indicates a measurement result of the performance indicator of the service flow.

The first network element analyzes the second indication information, to obtain a cause of the exception event of the service flow.

Alternatively, according to a first aspect, a fault location method is provided, including:
A first network element sends first indication information to a terminal device, where the first indication information indicates a performance indicator of a service flow of the terminal device, and the performance indicator of the service flow is associated with an exception event of the service flow.

The first network element receives second indication information from the terminal device, where the second indication information indicates a measurement result of the performance indicator of the service flow.

The first network element obtains a cause of the exception event of the service flow based on the second indication information.

Alternatively, according to a first aspect, a fault location method is provided, including:
A first network element sends first indication information to a terminal device, where the first indication information indicates a performance indicator for the terminal device to measure a service flow, and the performance indicator of the service flow is associated with an exception event of the service flow.

The first network element receives second indication information from the terminal device, where the second indication information indicates a measurement result of the performance indicator of the service flow.

The first network element obtains a cause of the exception event of the service flow based on the second indication information.

In the foregoing solution, the measurement result of the performance indicator that is of the service flow and that is associated with the exception event of the service flow of the terminal device is collected and analyzed, to obtain the cause of the exception event of the service flow, so that fault location analytics can be automatically performed on the terminal device, to quickly locate and handle a fault, and recover normal service provisioning. The measurement result of the performance indicator at a service flow level is collected and analyzed, so that a case in which fault demarcation cannot be performed and a case in which fault location is inaccurate are avoided, and more precise fault demarcation and location can be performed, thereby quickly handling the fault, and recovering the normal service provisioning.

With reference to the first aspect, in some implementations of the first aspect, the exception event of the service flow includes at least one of the following: video freezing corresponding to the service flow, a control delay exception corresponding to the service flow, and the like. This application is not limited to the two exception events.

With reference to the first aspect, in some implementations of the first aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, a transmission delay of a downlink packet on an N3 interface, and the like. This application is not limited to the performance indicator of the service flow.

It should be understood that in a 5th generation communication system (5th generation system, 5GS) architecture, information exchange may be directly performed between network elements through a service-based interface. An N3 interface is a reference point between a radio access network element and a user plane function network element, and is used to transmit user plane data and the like.

With reference to the first aspect, in some implementations of the first aspect, the method further includes:
The first network element determines the performance indicator of the service flow based on the exception event of the service flow.

With reference to the first aspect, in some implementations of the first aspect, that the first network element determines the performance indicator of the service flow based on the exception event of the service flow includes:
The first network element determines the performance indicator of the service flow based on the exception event of the service flow and a correspondence between the exception event of the service flow and the performance indicator of the service flow.

With reference to the first aspect, in some implementations of the first aspect, the correspondence between the exception event of the service flow and the performance indicator of the service flow includes:
video freezing corresponding to the service flow corresponds to at least one of the following performance indicators of the service flow: an uplink packet data convergence protocol packet loss count and a downlink packet data convergence protocol packet loss count; and
a control delay exception corresponding to the service flow corresponds to at least one of the following performance indicators of the service flow: an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

With reference to the first aspect, in some implementations of the first aspect, the method further includes:
The first network element receives an identifier of the terminal device and third indication information from a second network element, where the third indication information indicates the exception event of the service flow.

That a first network element sends first indication information to a terminal device includes:
The first network element sends the first indication information to the terminal device based on the identifier of the terminal device and the third indication information.

With reference to the first aspect, in some implementations of the first aspect, the method further includes:
The first network element receives an identifier of the terminal device and the first indication information from a second network element.

With reference to the first aspect, in some implementations of the first aspect, the method further includes:
The first network element sends fourth indication information to the second network element, where the fourth indication information indicates the cause of the exception event of the service flow.

With reference to the first aspect, in some implementations of the first aspect, the method further includes:
The first network element sends a first request message to the terminal device, where the first request message is for requesting the terminal device to measure the performance indicator of the service flow.

The first network element receives a first response message from the terminal device, where the first response message indicates whether the performance indicator of the service flow is measured based on the request message.

With reference to the first aspect, in some implementations of the first aspect, the method further includes:
The first network element receives a second request message from the second network element, where the second request message is for requesting to measure the performance indicator of the service flow.

The first network element sends a second response message to the second network element based on the first response message, where the second response message indicates whether the terminal device receives the performance indicator for measuring the service flow.

With reference to the first aspect, in some implementations of the first aspect, the method further includes:
When the second response message indicates that the terminal device does not receive the performance indicator for measuring the service flow, the first response message includes a cause value, where the cause value indicates a reason why the terminal device does not receive the performance indicator for measuring the service flow.

With reference to the first aspect, in some implementations of the first aspect, that a first network element sends first indication information to a terminal device includes:
The first network element directly sends the first indication information to the terminal device, or the first network element sends the first indication information to the terminal device via a third network element, where the third network element includes a core network element device and a radio access network element device.

With reference to the first aspect, in some implementations of the first aspect, a type of the message that carries the first indication information indicates that the first indication information is used by the terminal device to measure the performance indicator of the service flow.

With reference to the first aspect, in some implementations of the first aspect, the first network element sends fifth indication information to the third network element, where the fifth indication information indicates that the first indication information is used by the terminal device to measure the performance indicator of the service flow.

With reference to the first aspect, in some implementations of the first aspect, that the first network element receives second indication information from the terminal device includes:
The first network element directly receives the second indication information from the terminal device, or the first network element receives the second indication information from the terminal device via the third network element, where the third network element includes the core network element device and the radio access network element device.

With reference to the first aspect, in some implementations of the first aspect, a type of a message that carries the second indication information indicates that the second indication information is used to report the measurement result of the performance indicator of the service flow.

With reference to the first aspect, in some implementations of the first aspect, the first network element receives sixth indication information from the third network element, where the sixth indication information indicates that the second indication information is used to report the measurement result of the performance indicator of the service flow.

According to a second aspect, a fault location method is provided, including:
A second network element sends an identifier of a terminal device and third indication information to a first network element, where the third indication information indicates an exception event of a service flow of the terminal device.

The second network element receives fourth indication information from the first network element, where the fourth indication information indicates a cause of the exception event of the service flow, the cause is determined based on a measurement result of a performance indicator of the service flow, and the performance indicator of the service flow is associated with the exception event of the service flow.

In the foregoing solution, the cause of the exception event of the service flow is collected for the exception event of the service flow of the terminal device, so that fault location analytics can be automatically performed on the terminal device, to quickly locate and handle a fault, and recover normal service provisioning.

With reference to the second aspect, in some implementations of the second aspect, the exception event of the service flow includes at least one of the following: video freezing corresponding to the service flow and a control delay exception corresponding to the service flow.

With reference to the second aspect, in some implementations of the second aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

According to a third aspect, a fault location method is provided, including:
A second network element determines a performance indicator of a service flow based on an exception event of the service flow.

The second network element sends first indication information to a first network element, where the first indication information indicates the performance indicator of the service flow of a terminal device, and the performance indicator of the service flow is used to determine a cause of the exception event of the service flow.

The second network element receives fourth indication information from the first network element, where the fourth indication information indicates the cause of the exception event of the service flow.

In the foregoing solution, the associated performance indicator used to determine the cause of the exception event of the service flow is determined for the exception event of the service flow of the terminal device, and the cause of the exception event of the service flow is obtained, so that fault location analytics can be automatically performed on the terminal device, to quickly locate and handle a fault, and recover normal service provisioning. The exception event and the performance indicator at a service flow granularity are considered when the cause of the exception event of the service flow is determined, so that a case in which fault demarcation cannot be performed and a case in which fault location is inaccurate can be avoided, and more precise fault demarcation and location can be performed, to more quickly handle the fault, and recover normal service provisioning.

With reference to the third aspect, in some implementations of the third aspect, the exception event of the service flow includes at least one of the following: video freezing corresponding to the service flow and a control delay exception corresponding to the service flow.

With reference to the third aspect, in some implementations of the third aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

With reference to the third aspect, in some implementations of the third aspect, that a second network element determines a performance indicator of a service flow based on an exception event of the service flow includes:
The second network element determines the performance indicator of the service flow based on the exception event of the service flow and a correspondence between the exception event of the service flow and the performance indicator of the service flow.

With reference to the third aspect, in some implementations of the third aspect, the correspondence between the exception event of the service flow and the performance indicator of the service flow includes:
the video freezing corresponding to the service flow corresponds to at least one of the following performance indicators of the service flow: the uplink packet data convergence protocol packet loss count and the downlink packet data convergence protocol packet loss count; and
the control delay exception corresponding to the service flow corresponds to at least one of the following performance indicators of the service flow: the uplink air interface transmission delay, the downlink air interface transmission delay, the quantity of packet data convergence protocol packets with an uplink air interface transmission delay greater than the first threshold, the delay of processing the downlink packet by the user plane function network element, the delay of processing the downlink packet by the terminal device, the delay of processing the downlink packet by the radio access network element device, the quantity of downlink packets on the N3 interface with a delay greater than the second threshold, and the transmission delay of the downlink packet on the N3 interface.

According to a fourth aspect, a fault location method is provided, including:
A terminal device receives first indication information from a first network element, where the first indication information indicates a performance indicator of a service flow of the terminal device, and the performance indicator of the service flow is associated with an exception event of the service flow.

The terminal device measures the performance indicator of the service flow based on the first indication information, to obtain a measurement result of the performance indicator of the service flow.

The terminal device sends second indication information to the first network element, where the second indication information indicates the measurement result of the performance indicator of the service flow.

In the foregoing solution, the terminal device measures the performance indicator that is of the service flow and that is associated with the exception event of the service flow, and reports the measurement result to a network, so that the network analyzes the measurement result, to obtain the cause of the exception event of the service flow, and fault location analytics are automatically performed on the terminal device, to quickly locate and handle a fault, and recover normal service provisioning. The performance indicator at a service flow granularity is collected, and the measurement result is fed back to the network, so that a case in which fault demarcation cannot be performed and a case in which fault location is inaccurate can be avoided, and more precise fault demarcation and location can be performed, to quickly handle the fault, and recover normal service provisioning.

With reference to the fourth aspect, in some implementations of the fourth aspect, the exception event of the service flow includes at least one of the following: video freezing corresponding to the service flow and a control delay exception corresponding to the service flow.

With reference to the fourth aspect, in some implementations of the fourth aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

According to a fifth aspect, a fault location apparatus is provided, including:
a transceiver module, configured to send first indication information to a terminal device, where the first indication information indicates a performance indicator of a service flow of the terminal device, and the performance indicator of the service flow is associated with an exception event of the service flow, where
the transceiver module is further configured to receive second indication information from the terminal device, where the second indication information indicates a measurement result of the performance indicator of the service flow; and
a processing module, configured to analyze the second indication information, to obtain a cause of the exception event of the service flow.

Alternatively, according to a fifth aspect, a fault location apparatus is provided, including:
a transceiver module, configured to send first indication information to a terminal device, where the first indication information indicates a performance indicator of a service flow of the terminal device, and the performance indicator of the service flow is associated with an exception event of the service flow, where
the transceiver module is further configured to receive second indication information from the terminal device, where the second indication information indicates a measurement result of the performance indicator of the service flow; and
a processing module, configured to obtain a cause of the exception event of the service flow based on the second indication information.

In the foregoing solution, the measurement result of the performance indicator that is of the service flow and that is associated with the exception event of the service flow of the terminal device is collected and analyzed, to obtain the cause of the exception event of the service flow, so that fault location analytics can be automatically performed on the terminal device, to quickly locate and handle a fault, and recover normal service provisioning. The measurement result of the performance indicator at a service flow level is collected and analyzed, so that a case in which fault demarcation cannot be performed and a case in which fault location is inaccurate are avoided, and more precise fault demarcation and location can be performed, thereby quickly handling the fault, and recovering the normal service provisioning.

With reference to the fifth aspect, in some implementations of the fifth aspect, the exception event of the service flow includes at least one of the following: video freezing corresponding to the service flow and a control delay exception corresponding to the service flow.

With reference to the fifth aspect, in some implementations of the fifth aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

With reference to the fifth aspect, in some implementations of the fifth aspect, the processing module is further configured to determine the performance indicator of the service flow based on the exception event of the service flow.

With reference to the fifth aspect, in some implementations of the fifth aspect, the processing module is specifically configured to determine the performance indicator of the service flow based on the exception event of the service flow and a correspondence between the exception event of the service flow and the performance indicator of the service flow.

With reference to the fifth aspect, in some implementations of the fifth aspect, the correspondence between the exception event of the service flow and the performance indicator of the service flow includes:
video freezing corresponding to the service flow corresponds to at least one of the following performance indicators of the service flow: an uplink packet data convergence protocol packet loss count and a downlink packet data convergence protocol packet loss count; and
a control delay exception corresponding to the service flow corresponds to at least one of the following performance indicators of the service flow: an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

With reference to the fifth aspect, in some implementations of the fifth aspect, the transceiver module is further configured to receive an identifier of the terminal device and third indication information from a second network element, where the third indication information indicates the exception event of the service flow.

That a transceiver module is further configured to send first indication information to a terminal device includes:
The processing module is further configured to send the first indication information to the terminal device based on the identifier of the terminal device and the third indication information.

With reference to the fifth aspect, in some implementations of the fifth aspect, the transceiver module is further configured to receive the identifier of the terminal device and the first indication information from the second network element.

With reference to the fifth aspect, in some implementations of the fifth aspect, the transceiver module is further configured to send fourth indication information to the second network element, where the fourth indication information indicates the cause of the exception event of the service flow.

With reference to the fifth aspect, in some implementations of the fifth aspect, the transceiver module is further configured to send a first request message to the terminal device, where the first request message is for requesting the terminal device to measure the performance indicator of the service flow.

The transceiver module is further configured to receive a first response message from the terminal device, where the first response message indicates whether the performance indicator of the service flow is measured based on the request message.

With reference to the fifth aspect, in some implementations of the fifth aspect, the transceiver module is further configured to receive a second request message from the second network element, where the second request message is for requesting to measure the performance indicator of the service flow.

The processing module is further configured to send a second response message to the second network element based on the first response message, where the second response message indicates whether the terminal device receives the performance indicator for measuring the service flow.

With reference to the fifth aspect, in some implementations of the fifth aspect, when the second response message indicates that the terminal device does not receive the performance indicator for measuring the service flow, the first response message includes a cause value, where the cause value indicates a reason why the terminal device does not receive the performance indicator for measuring the service flow.

With reference to the fifth aspect, in some implementations of the fifth aspect, the transceiver module is further configured to directly send the first indication information to the terminal device, or the transceiver module is further configured to send the first indication information to the terminal device via a third network element, where the third network element includes a core network element device and a radio access network element device.

With reference to the fifth aspect, in some implementations of the fifth aspect, a type of the message that carries the first indication information indicates that the first indication information is used by the terminal device to measure the performance indicator of the service flow.

With reference to the fifth aspect, in some implementations of the fifth aspect, the transceiver module is further configured to send fifth indication information to the third network element, where the fifth indication information indicates that the first indication information is used by the terminal device to measure the performance indicator of the service flow.

With reference to the fifth aspect, in some implementations of the fifth aspect, the transceiver module is further configured to directly receive the second indication information from the terminal device, or the transceiver module is further configured to receive the second indication information from the terminal device via the third network element, where the third network element includes a core network element device and a radio access network element device.

With reference to the fifth aspect, in some implementations of the fifth aspect, a type of a message that carries the second indication information indicates that the second indication information is used to report the measurement result of the performance indicator of the service flow.

With reference to the fifth aspect, in some implementations of the fifth aspect, the transceiver module is further configured to receive sixth indication information from the third network element, where the sixth indication information indicates that the second indication information is used to report the measurement result of the performance indicator of the service flow.

According to a sixth aspect, a fault location apparatus is provided, including:
a transceiver module, configured to send an identifier of a terminal device and third indication information to a first network element, where the third indication information indicates an exception event of a service flow of the terminal device, where
the transceiver module is further configured to receive fourth indication information from the first network element, where the fourth indication information indicates a cause of the exception event of the service flow, the cause is determined based on a measurement result of a performance indicator of the service flow, and the performance indicator is determined based on the exception event of the service flow.

With reference to the sixth aspect, in some implementations of the sixth aspect, the exception event of the service flow includes at least one of the following: video freezing corresponding to the service flow and a control delay exception corresponding to the service flow.

With reference to the sixth aspect, in some implementations of the sixth aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

In the foregoing solution, the cause of the exception event of the service flow is collected for the exception event of the service flow of the terminal device, so that fault location analytics can be automatically performed on the terminal device, to quickly locate and handle a fault, and recover normal service provisioning.

According to a seventh aspect, a fault location apparatus is provided, including:
a processing module, configured to determine a performance indicator of a service flow based on an exception event of the service flow; and
a transceiver module, configured to send first indication information to a first network element, where the first indication information indicates the performance indicator of the service flow of a terminal device, and the performance indicator is used to determine a cause of the exception event of the service flow, where
the transceiver module is further configured to receive fourth indication information from the first network element, where the fourth indication information indicates the cause of the exception event of the service flow.

In the foregoing solution, the associated performance indicator used to determine the cause of the exception event of the service flow is determined for the exception event of the service flow of the terminal device, and the cause of the exception event of the service flow is obtained, so that fault location analytics can be automatically performed on the terminal device, to quickly locate and handle a fault, and recover normal service provisioning. The exception event and the performance indicator at a service flow granularity are considered when the cause of the exception event of the service flow is determined, so that a case in which fault demarcation cannot be performed and a case in which fault location is inaccurate can be avoided, and more precise fault demarcation and location can be performed, to more quickly handle the fault, and recover normal service provisioning.

With reference to the seventh aspect, in some implementations of the seventh aspect, the exception event of the service flow includes at least one of the following: video freezing corresponding to the service flow and a control delay exception corresponding to the service flow.

With reference to the seventh aspect, in some implementations of the seventh aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

With reference to the seventh aspect, in some implementations of the seventh aspect, the processing module is specifically configured to determine the performance indicator of the service flow based on the exception event of the service flow and a correspondence between the exception event of the service flow and the performance indicator of the service flow.

With reference to the seventh aspect, in some implementations of the seventh aspect, the correspondence between the exception event of the service flow and the performance indicator of the service flow includes:
the video freezing corresponding to the service flow corresponds to at least one of the following performance indicators of the service flow: the uplink packet data convergence protocol packet loss count and the downlink packet data convergence protocol packet loss count; and
the control delay exception corresponding to the service flow corresponds to at least one of the following performance indicators of the service flow: the uplink air interface transmission delay, the downlink air interface transmission delay, the quantity of packet data convergence protocol packets with an uplink air interface transmission delay greater than the first threshold, the delay of processing the downlink packet by the user plane function network element, the delay of processing the downlink packet by the terminal device, the delay of processing the downlink packet by the radio access network element device, the quantity of downlink packets on the N3 interface with a delay greater than the second threshold, and the transmission delay of the downlink packet on the N3 interface.

According to an eighth aspect, a fault location apparatus is provided, including:
a transceiver module, configured to receive first indication information from a first network element, where the first indication information indicates a performance indicator of a service flow of a terminal device, and the performance indicator of the service flow is associated with an exception event of the service flow; and
a processing module, configured to measure the performance indicator of the service flow based on the first indication information, to obtain a measurement result of the performance indicator of the service flow, where
the transceiver module is further configured to send second indication information to the first network element, where the second indication information indicates the measurement result of the performance indicator of the service flow.

In the foregoing solution, the terminal device measures the performance indicator that is of the service flow and that is associated with the exception event of the service flow, and reports the measurement result to a network, so that the network analyzes the measurement result, to obtain the cause of the exception event of the service flow, and fault location analytics are automatically performed on the terminal device, to quickly locate and handle a fault, and recover normal service provisioning. The performance indicator at a service flow granularity is collected, and the measurement result is fed back to the network, so that a case in which fault demarcation cannot be performed and a case in which fault location is inaccurate can be avoided, and more precise fault demarcation and location can be performed, to quickly handle the fault, and recover normal service provisioning.

With reference to the eighth aspect, in some implementations of the eighth aspect, the exception event of the service flow includes at least one of the following: video freezing corresponding to the service flow and a control delay exception corresponding to the service flow.

With reference to the eighth aspect, in some implementations of the eighth aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

According to a ninth aspect, a fault location method is provided, including: A first network element sends first indication information to a terminal device, where the first indication information indicates a performance indicator of a service flow of the terminal device, and the performance indicator of the service flow is associated with an exception event of the service flow. The terminal device measures the performance indicator of the service flow based on the first indication information, to obtain a measurement result of the performance indicator of the service flow. The terminal device sends second indication information to the first network element, where the second indication information indicates the measurement result of the performance indicator of the service flow. The first network element analyzes the second indication information, to obtain a cause of the exception event of the service flow.

With reference to the ninth aspect, in some implementations of the ninth aspect, the method further includes: The first network element determines the performance indicator of the service flow based on the exception event of the service flow.

With reference to the ninth aspect, in some implementations of the ninth aspect, the exception event of the service flow includes at least one of the following: video freezing corresponding to the service flow, a control delay exception corresponding to the service flow, and the like. This application is not limited to the two exception events.

With reference to the ninth aspect, in some implementations of the ninth aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, a transmission delay of a downlink packet on an N3 interface, and the like. This application is not limited to the performance indicator of the service flow.

According to a tenth aspect, a fault location method is provided, including: A second network element sends an identifier of a terminal device and third indication information to a first network element, where the third indication information indicates an exception event of a service flow of the terminal device. The first network element sends first indication information to the terminal device based on the identifier of the terminal device and the third indication information. The terminal device measures a performance indicator of the service flow based on the first indication information, to obtain a measurement result of the performance indicator of the service flow. The terminal device sends second indication information to the first network element, where the second indication information indicates the measurement result of the performance indicator of the service flow. The first network element analyzes the second indication information, to obtain a cause of the exception event of the service flow. The first network element sends fourth indication information to the second network element, where the fourth indication information indicates the cause of the exception event of the service flow.

With reference to the tenth aspect, in some implementations of the tenth aspect, the exception event of the service flow includes at least one of the following: video freezing corresponding to the service flow, a control delay exception corresponding to the service flow, and the like. This application is not limited to the two exception events.

With reference to the tenth aspect, in some implementations of the tenth aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, a transmission delay of a downlink packet on an N3 interface, and the like. This application is not limited to the performance indicator of the service flow.

According to an eleventh aspect, a fault location method is provided, including: A second network element determines a performance indicator of a service flow based on an exception event of the service flow. The second network element sends first indication information to a first network element, where the first indication information indicates the performance indicator of the service flow of a terminal device, and the performance indicator is used to determine a cause of the exception event of the service flow. The first network element sends the first indication information to the terminal device, where the first indication information indicates the performance indicator of the service flow of the terminal device, and the performance indicator of the service flow is associated with the exception event of the service flow. The terminal device measures the performance indicator of the service flow based on the first indication information, to obtain a measurement result of the performance indicator of the service flow. The terminal device sends second indication information to the first network element, where the second indication information indicates the measurement result of the performance indicator of the service flow. The first network element analyzes the second indication information, to obtain the cause of the exception event of the service flow. The first network element sends fourth indication information to the second network element, where the fourth indication information indicates the cause of the exception event of the service flow.

With reference to the eleventh aspect, in some implementations of the eleventh aspect, the exception event of the service flow includes at least one of the following: video freezing corresponding to the service flow, a control delay exception corresponding to the service flow, and the like. This application is not limited to the two exception events.

With reference to the eleventh aspect, in some implementations of the eleventh aspect, the performance indicator of the service flow includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, a transmission delay of a downlink packet on an N3 interface, and the like. This application is not limited to the performance indicator of the service flow.

According to a twelfth aspect, a fault location system is provided, including a first network element and a terminal device, where the first network element is configured to perform the method according to the first aspect, and the terminal device is configured to perform the method according to the second aspect.

According to a thirteenth aspect, a fault location system is provided, including a first network element, a second network element, and a terminal device, where the first network element is configured to perform the method according to the first aspect, the terminal device is configured to perform the method according to the second aspect, and the second network element is configured to perform the method according to the third aspect or the fourth aspect.

According to a fourteenth aspect, a communication apparatus is provided, including:
a processor and a memory, where
the memory is configured to store a computer program; and
the processor is configured to execute the computer program stored in the memory, to enable the communication apparatus to perform the communication method according to any one of the first aspect to the fourth aspect.

According to a fifteenth aspect, a computer-readable storage medium is provided, where the computer-readable storage medium stores instructions, and when the computer instructions are run on a computer, the computer is enabled to perform the method according to any one of the first aspect to the fourth aspect.

According to a sixteenth aspect, a chip is provided, including:
a memory, configured to store a computer program; and
a processor, configured to: read and execute the computer program stored in the memory, where when the computer program is executed, the processor performs the method according to any one of the first aspect to the fourth aspect.

According to a seventeenth aspect, a computer program product is provided, where the computer program product includes computer program code, and when the computer program code is run on a computer, the computer is enabled to perform the method according to any one of the first aspect to the fourth aspect.

### BRIEF DESCRIPTION OF DRAWINGS

FIG. 1 is a diagram of an example of an end-to-end (end to end, E2E) network in a 5G toB scenario;
FIG. 2 is a diagram of a management architecture, of operations and maintenance integration of a wireless terminal, to which a solution provided in this application is applicable;
FIG. 3 is a diagram of another example of a management architecture to which a solution provided in this application is applicable;
FIG. 4 is a diagram of a fault location method 100 according to this application;
FIG. 5 is a diagram of a fault location method 200 according to this application;
FIG. 6 is a diagram of a fault location method 300 according to this application;
FIG. 7 is a diagram of a fault location method 400 according to this application;
FIG. 8 is a diagram of a fault location method 500 according to this application;
FIG. 9 is a diagram of a fault location method 600 according to this application;
FIG. 10 is a diagram of a fault location method 700 according to this application;
FIG. 11 is a diagram of a fault location method 800 according to this application;
FIG. 12 is a diagram of a fault location method 900 according to this application;
FIG. 13 is a diagram of a fault location method 1000 according to this application;
FIG. 14 is a diagram of a fault location method 1100 according to this application;
FIG. 15 is a diagram of a fault location method 1200 according to this application;
FIG. 16 is a block diagram of a fault location apparatus according to an embodiment of this application; and
FIG. 17 is a diagram of an apparatus 20 according to an embodiment of this application.

### DESCRIPTION OF EMBODIMENTS

The following describes technical solutions in embodiments of this application with reference to the accompanying drawings.

The technical solutions provided in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a wireless fidelity (wireless fidelity, Wi-Fi)-based communication system, a 5th generation (5th generation, 5G) system, a new radio (new radio, NR) system, or a future 3GPP or non-3GPP system.

In a mobile network, an operator, serving as a network communication service provider, is mainly responsible for network construction and routine operations and maintenance management. The network operations and maintenance management includes network operations and maintenance management functions such as configuration management, performance management, fault management, and the like, where the fault management is one of key and difficult points of network management for the operator. Currently, main functions implemented through the network fault management include fault information query, fault reporting, fault information clearing, and the like. However, after receiving network fault alarm reporting information, a network management system cannot determine a network fault point at which a fault occurs (for example, cannot determine whether there is a fault occurs on a network element or a link, or cannot determine whether a fault occurs on a radio access network element device or a core network element device). To locate the fault, the operator usually arranges operations and maintenance management engineers to perform packet capture onsite for different network element nodes or segmented links in the network, and perform fault location analytics based on packet capture data.

Currently, a network fault management mechanism defined in a 3rd generation partnership project (3rd generation partnership project, 3GPP) standard is mainly used to manage fault information of a network device. However, in a 5G toB scenario, a large quantity of terminal devices such as customer-premises equipment (customer-premises equipment, CPE) and a programmable controller (programmable logic controller, PLC) are deployed in a private network of an enterprise campus.

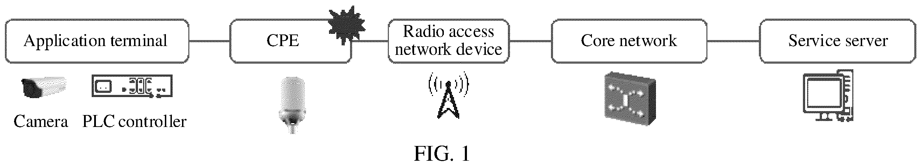

FIG. 1 is a diagram of an example of an end-to-end (end to end, E2E) network in a 5G toB scenario.

With reference to FIG. 1, the following describes an E2E network by using a terminal of this type of CPE as an example. As shown in FIG. 1, the CPE, as a common terminal role, needs to be connected to a radio access network element device (for example, a gNB) by using a radio technology, and the radio access network element device needs to be connected to a service server through a core network. In addition, the CPE may also serve as a wireless access point to provide a wireless access function for other terminals (such as a PLC controller and a camera). In this way, an E2E network is formed from the service server to an application terminal. For example, when a fault (for example, unexpected start of the device, an excessively high ambient temperature, poor terminal location coverage, or a disconnection of the CPE) occurs in CPE, a 5G toB E2E service is affected.

Therefore, when the terminal device that can provide a wireless access service for other devices is faulty, to recover normal service provisioning as soon as possible, these terminal devices, especially fault management of these terminal devices, need to be managed uniformly. However, currently, terminal devices deployed in a private network of customers' enterprise campus have at least two aspects of features. It is inconvenient for unified management. In an aspect, the terminal devices are purchased and deployed by customers, or are purchased and deployed by an operator. Therefore, terminal devices manufactured by a plurality of manufacturers (such as CPE of a manufacturer A and CPE of a manufacturer B) coexist, and these terminal devices may support different terminal management protocols (such as TR-069, TR-369, and LWM2M, where the terminal management protocols herein are described below). In another aspect, the terminal devices manufactured by different manufacturers are usually managed (including a terminal device parameter configuration, performance monitoring management, and the like) by corresponding terminal management systems of the manufacturers of the terminal devices according to the corresponding terminal management protocols in the previous aspect. Therefore, the terminal management system and the network management system mentioned above are independent management systems.

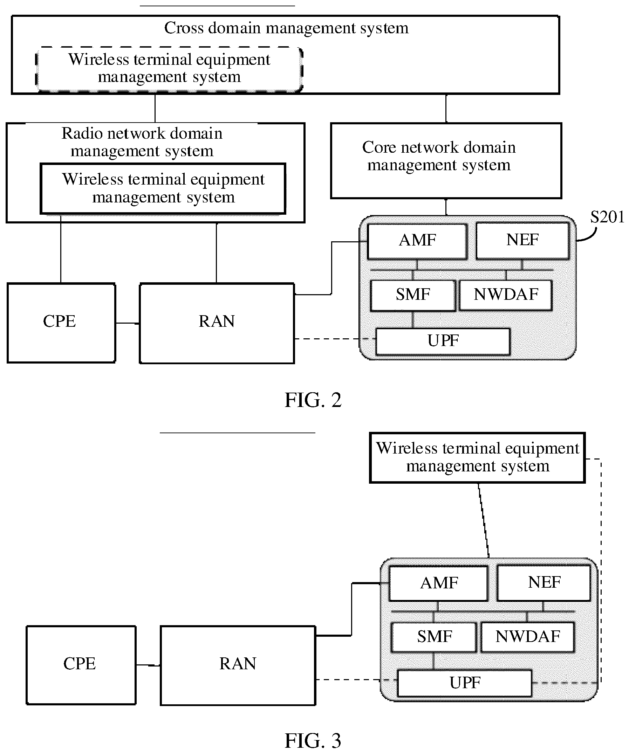

With reference to FIG. 2, the following describes a possible implementation of an E2E integrated and unified operations and maintenance management architecture provided in this application.

FIG. 2 is a diagram of a management architecture, of operations and maintenance integration of a wireless terminal, to which a solution provided in this application is applicable.

As shown in FIG. 2, a wireless terminal equipment management function for managing a wireless terminal is separately integrated with a radio access network domain management system and a cross domain management system. Alternatively, a wireless terminal equipment management function may be integrated with only a radio access network domain management system. In this way, information exchange can be performed between a wireless terminal management system and a network management system, so that the two systems coordinate to process a service, thereby improving communication efficiency of an E2E network.

A main function of the wireless terminal equipment management function (wireless terminal equipment management Function, WTEMF) is to manage a wireless terminal (such as CPE), including providing functions such as online registration, a parameter configuration, performance management, and fault management for the wireless terminal. A "cross domain WTEMF" in this application may be understood as a WTEMF integrated with the cross domain management system or a WTEMF deployed in the cross domain management system. A "domain WTEMF" in this application may be understood as a WTEMF integrated with the radio access network domain management system or a WTEMF deployed in the radio access network domain management system.

It needs to be noted that each network element or entity that has the function of managing the wireless terminal falls within the protection scope of the wireless terminal equipment management function described in this application, and a name of the wireless terminal equipment management function is not limited in this application.

The following describes functions of parts in the management architecture in detail.

First, three management systems are described.
1. A cross domain management system is a functional entity for an operator to implement cross domain network management (that is, to manage both a radio access network and a core network).
2. A radio access network domain management system/RAN domain management system is a functional entity that manages a network element in a wireless network.
3. A core network domain management system is a functional entity that manages a network element in the core network.

The foregoing systems all include a plurality of management functions for providing specific operations and maintenance management jobs, for example, a configuration management function for providing a network parameter configuration management service (network provisioning management service), and a performance management function for providing a network performance management service (performance assurance management service).

The following describes network elements in an S201 frame. The S201 frame may be understood as the "core network" in FIG. 1. The network elements in S201 are core network elements, including a 5G core network control plane function (5G core control plane network function, 5GC CNF) and user plane function (user plane function, UPF).

The UPF is a unique user plane function network element in a 5G core network, and is responsible for functions such as user data forwarding, quality of service (quality of service, QoS) execution, and charging statistics collection. The 5GC CNF refers to all control-plane function network elements in the 5G core network, including an access and mobility management function (access and mobility management function, AMF) network element, a session management function (session management function, SMF), a network exposure function (network exposure function, NEF), and a network data analytics function (network data analytics function, NWDAF). Details are as follows:
1. The AMF is responsible for authentication and mobility management of CPE.
2. The SMF is responsible for session management of user plane data transmission of the CPE, including session creation, deletion, and modification.
3. The NEF is responsible for exposing network capability information to a third-party functional entity.
4. The NWDAF is responsible for intelligent analytics of data such as a network status.

Finally, a RAN and the CPE are described.

A radio access network (radio access network, RAN) is a network element that has a function of the radio access network, and is mainly responsible for functions such as radio access control and radio resource allocation. The network element in the wireless network may include only a gNB, or may include a central unit (central unit, CU) and a distributed unit (distributed unit, DU), or may include a central unit-control plane (central unit-control plane, CU-CP) and a central unit-user plane (central unit-user plane, CU-UP).

The CPE in FIG. 2 has been described above. Details are not described herein again.

FIG. 3 is a diagram of another example of a management architecture to which a solution provided in this application is applicable.

In the management architecture, a WTEMF is independently deployed, and it may be understood that the cross domain WTEMF and the domain WTEMF in FIG. 2 are integrated. For descriptions of network elements in the architecture, refer to corresponding descriptions in FIG. 2.

For ease of understanding embodiments of this application, the following explains technical terms.
1. Dialing test: A measurement command for a specified key performance indicator (key performance indicator, KPI) and a measurement manner are sent to a terminal, to trigger the terminal to collect performance KPI data. A dialing test type includes an operation type of a dialing test performed by CPE or a KPI that needs to be measured. The operation type of the dialing test performed by the CPE includes at least one of the following: internet protocol address (internet protocol address, IP address) packet internet groper (packet internet groper, Ping) diagnostics (which may be used to measure a network delay such as a network transmission delay, or a performance indicator such as a network packet loss rate), speed measurement (which is used to measure a network rate), heartbeat check (which is used to detect a network link connectivity status), and the like. It needs to be noted that all operation types that have same functions as the IP address ping diagnostic, the speed measurement, and the heartbeat check herein fall within the protection scope of this application.
2. Maintenance and test: Diagnostic analytics is performed based on the dialing test type of the terminal and by using collected data obtained by collecting performance KPI data related to the terminal, to identify an exception fault, including a network domain (the terminal, wireless, transmission, or a core network) where the fault occurs and a specific fault root cause.
3. Terminal management protocol: A terminal management protocol adopts an object (object)-based design idea, defines a series of objects that describe a device, and uses a standard method (method) or operation (operation) method to operate these objects, to implement a specific management function for a terminal device.

For example, the terminal in 1, 2, and 3 may be an industry terminal, and the industry terminal may be understood as a wireless terminal device deployed in a vertical industry enterprise campus network.

The following describes three terminal management protocols.

### Protocol 1:

TR069: TR069 is a protocol proposed by the digital subscriber line (digital subscriber line, DSL) forum (forum) (which was renamed the broadband forum (broadband forum, BBF) in 2018), namely, a CPE wide area network management protocol (CPE WAN management protocol, CWMP) protocol, numbered TR-069, and therefore is also referred to as a TR-069 protocol. It provides a general framework, a message specification, a management method, and a data model for managing and configuring a home network device in a next generation network, which greatly reduces operations and maintenance costs of a network product. The BBF has released a TR-369 protocol enhanced from TR-069.

A remote procedure call (remote process call, RPC) is an encapsulation method of a TR069 protocol specification. An RPC method may include at least one of the following: a supported method for an auto-configuration server (auto-configuration server, ACS) to discover CPE, a method for obtaining a device parameter name, a method for setting a device parameter, a method for adding an instance, a method for deleting an instance, a method for a device to upload a log or configuration, a method for downloading a device version or a configuration, a method for restarting a device, a method for a device to report an upload or download result to a server, a method for restoring a device to factory settings, and a method for a device to actively upload a file to a server. The RPC method is used to manage the data model.

### Protocol 2:

Message queuing telemetry transport (message queuing telemetry transport, MQTT) is an instant messaging protocol developed by international business machines corporation (international business machines corporation, IBM).

### Protocol 3:

Lightweight M2M (Lightweight M2M, LWM2M): It is a lightweight internet of things device management protocol defined according to a conventional open mobile alliance (open mobile alliance, OMA)-DM protocol (a protocol used to remotely manage a mobile terminal device).

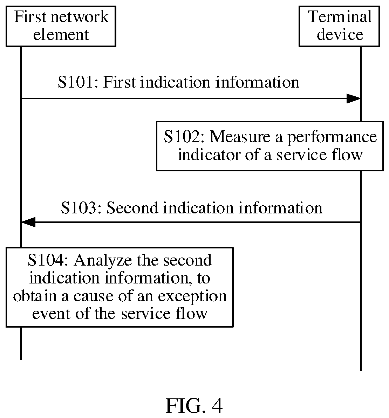

The foregoing describes the scenario or the architecture to which a fault location method in this application is applicable. The following describes a method 100 to a method 1100 in this application with reference to FIG. 4 to FIG. 15.

FIG. 4 is a diagram of a fault location method 100 according to this application.

S101: A first network element sends first indication information to a terminal device, and correspondingly, the terminal device receives the first indication information from the first network element, where the first indication information indicates a performance indicator of a service flow of the terminal device, and the performance indicator of the service flow is associated with an exception event of the service flow.

Alternatively, the first indication information indicates a terminal to measure the performance indicator of the service flow.

For example, the terminal device in this application may be an industry terminal.

It should be understood that the exception event of the service flow herein may be one or more exception events of one service flow, or may be one or more exception events of a plurality of service flows. For example, the exception event of the service flow herein includes an exception event of a first service flow and an exception event of a second service flow. Correspondingly, the performance indicator of the service flow includes a performance indicator that is of the first service flow and that is associated with the exception event of the first service flow, and a performance indicator that is of the second service flow and that is associated with the exception event of the second service flow.

For example, the exception event of the service flow herein includes at least one of the following: video freezing corresponding to the service flow and a control delay exception corresponding to the service flow.

It needs to be noted that the exception event of the service flow in this application includes but is not limited to the foregoing two items, and may further include another possible exception event. This is not limited in this application.

For example, the performance indicator of the service flow herein includes at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

It should be understood that in a 5th generation communication system (5th generation system, 5GS) architecture, information exchange may be directly performed between network elements through a service-based interface. An N3 interface is a reference point between a radio access network element and a user plane function network element, and is used to transmit user plane data and the like.

It should be understood that the performance indicator of the service flow herein may be understood as a type of the indicator for which performance measurement needs to be performed on the service flow.

It needs to be noted that the performance indicator of the service flow in this application includes but is not limited to the foregoing several items, and may further include another possible performance indicator that needs to be measured. This is not limited in this application.

For example, the first indication information herein may explicitly indicate the performance indicator of the service flow, or may implicitly indicate the performance indicator of the service flow by indicating an operation type of dialing test measurement that needs to be performed by the terminal. For example, the first indication information herein indicates a type 1 of an operation that needs to be performed by the terminal device, and this operation type is used to measure performance indicators 1, 2, and 3. In this case, the terminal device may determine, based on the operation type 1 indicated by the first indication information, the performance indicators 1, 2, and 3 that need to be measured. For example, the performance indicators 1, 2, and 3 may be respectively the delay of processing the downlink packet by the radio access network element device, the quantity of downlink packets on the N3 interface with a delay greater than the second threshold, and the transmission delay of the downlink packet on the N3 interface. A name of the operation type 1 is not limited in this application.

For example, the performance indicator of the service flow is associated with the exception event of the service flow. It may be understood that the performance indicator of the service flow is determined based on the exception event of the service flow, or it may be understood that there is a correspondence between the performance indicator of the service flow and the exception event of the service flow.

Similarly, both the exception event of the service flow and the performance indicator of the service flow in the method 100 may be understood in the foregoing manner.

Before S101, the method 100 may include: The first network element obtains a performance indicator of a service flow.

For example, the performance indicator of the service flow may be configured on the first network element. Alternatively, for example, the first network element receives the performance indicator of the service flow from a second network element. Alternatively, for another example, the first network element determines the performance indicator of the service flow based on the exception event of the service flow.

The following describes an implementation in which the first network element determines the performance indicator of the service flow based on the exception event of the service flow, and an implementation in which the first network element receives the performance indicator of the service flow from a second network element.

Implementation 1: The first network element determines the performance indicator of the service flow based on the exception event of the service flow.

Step 1: The first network element obtains the exception event of the service flow. The first network element may obtain the exception event of the service flow in a plurality of manners. For example, the exception event of the service flow is configured on the first network element; the second network element sends description information of the exception event of the service flow to the first network element, and correspondingly, the first network element receives the description information of the exception event of the service flow from the second network element; or the second network element sends an identifier index of the exception event to the first network element, and correspondingly, the first network element receives the identifier index of the exception event from the second network element. Alternatively, the first network element may alternatively determine the exception event of the service flow of the terminal device based on received information.

Example 1: The second network element sends an identifier of the terminal device and third indication information to the first network element, and correspondingly, the first network element receives the identifier of the terminal device and the third indication information from the second network element, where the third indication information indicates the exception event of the service flow. The first network element determines the exception event of the service flow of the terminal device based on the identifier of the terminal device and the third indication information.

It should be understood that the first network element, the second network element, or another network element may identify the terminal device based on the identifier of the terminal device. The identifier of the terminal device herein includes but is not limited to: an equipment serial number (equipment serial number, ESN)/electronic serial number, a device IP address, a system architecture evolution (system architecture evolution, SAE) temporary mobile subscriber identity (SAE temporary mobile subscriber identity, S-TMSI), and a globally unique temporary subscriber identity (globally unique temporary UE identity, 5G-GUTI).

Step 2: The first network element may determine the performance indicator of the service flow based on the exception event of the service flow and a correspondence between the exception event of the service flow and the performance indicator of the service flow.

The correspondence between the exception event of the service flow and the performance indicator of the service flow herein may include:
video freezing corresponding to the service flow corresponds to at least one of the following performance indicators of the service flow: an uplink packet data convergence protocol packet loss count and a downlink packet data convergence protocol packet loss count; and
a control delay exception corresponding to the service flow corresponds to at least one of the following performance indicators of the service flow: an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

Optionally, with reference to Example 1 and step 2, that the first network element sends the performance indicator of the service flow to the terminal device may be understood as that the first network element sends the performance indicator of the service flow to the terminal device based on the identifier of the terminal device and the third indication information.

Implementation 2: The first network element receives the performance indicator of the service flow from the second network element.

Step 1: The second network element obtains an exception event of the service flow. The second network element may obtain the exception event of the service flow in a plurality of manners. For example, the exception event of the service flow is configured on the second network element, or another network element sends the exception event of the service flow to the second network element, and correspondingly, the second network element receives the exception event of the service flow from the another network element.

Step 2: The second network element determines the performance indicator of the service flow based on the exception event of the service flow and a correspondence between the exception event of the service flow and the performance indicator of the service flow.

For the correspondence between the exception event of the service flow and the performance indicator of the service flow herein, refer to corresponding descriptions in Implementation 1.

Step 3: The second network element sends the performance indicator of the service flow to the first network element, and correspondingly, the first network element receives the performance indicator of the service flow from the second network element.

S102: The terminal device measures the performance indicator of the service flow based on the first indication information, to obtain a measurement result of the performance indicator of the service flow.

For example, to help the terminal device measure the performance indicator of the service flow, performance of the terminal device may be enhanced.

Example 1: The first indication information may implicitly indicate the terminal device to measure the performance indicator of the service flow.

The terminal device determines, based on the first indication information, that the performance indicator that is of the service flow that needs to be measured is an uplink air interface transmission delay and a downlink air interface transmission delay of the first service flow. In this case, the terminal device may measure the uplink air interface transmission delay and the downlink air interface transmission delay of the first service flow, to obtain statistical results of the two performance indicators.

Example 2: The first network element may further send another information or message to explicitly indicate the terminal device to measure the performance indicator of the service flow.

The first network element sends a first request message to the terminal device, and correspondingly, the terminal device receives the first request message from the first network element, where the first request message is for requesting the terminal device to measure the performance indicator of the service flow. The terminal device sends a first response message to the first network element, and correspondingly, the first network element receives the first response message from the terminal device, where the first response message indicates whether the performance indicator of the service flow is measured based on the request message. It should be understood that the first request message herein explicitly indicates the terminal device to measure the performance indicator of the service flow.

It should be further understood that, after receiving the first request message, the terminal device determines whether to accept the request message. If accepting the request message, the terminal device feeds back "yes" in the first response message, or if rejecting the request message, the terminal device feeds back "no". When the feedback is "no", a cause value may be further carried. The cause value indicates a reason why the terminal device does not receive the performance indicator for measuring the service flow, for example, indicates that the terminal device is offline, or the measurement of the performance indicator of the service flow is unsupported. When the feedback is "yes" in the first response message, the terminal device performs S102.

For Example 2, optionally, the first network element may further indicate, based on information or a message received from the second network element, the terminal device to measure the performance indicator of the service flow. Correspondingly, after receiving the feedback from the terminal device, the first network element may also continue to perform the feedback to the second network element.

For example, the first network element receives a second request message from the second network element, where the second request message is for requesting to measure the performance indicator of the service flow. Correspondingly, after receiving the first response message, the first network element may send a second response message to the second network element based on the first response message, where the second response message indicates whether the terminal device receives the performance indicator for measuring the service flow.

S103: The terminal device sends second indication information to the first network element, and correspondingly, the first network element receives the second indication information from the terminal device, where the second indication information indicates the measurement result of the performance indicator of the service flow.

For example, the terminal device may report the measurement result of the performance indicator of the service flow according to a terminal management protocol.

S104: The first network element analyzes the second indication information, to obtain a cause of the exception event of the service flow.

In other words, the first network element obtains the cause of the exception event of the service flow based on the second indication information.

For example, there is a correspondence between the measurement result of the performance indicator of the service flow and the exception event of the service flow. The first network element may determine the cause of the exception event of the service flow based on the correspondence.

For example, the first network element may perform diagnostic analytics based on a method such as an artificial intelligence machine learning algorithm. This is not limited in this application.

Optionally, the first network element may further send the cause of the exception event of the service flow to the second network element.

For example, after obtaining the cause of the exception event of the service flow, the first network element may send fourth indication information to the second network element, where the fourth indication information indicates the cause of the exception event of the service flow. Before this, the second network element may explicitly or implicitly indicate the first network element to report the fourth indication information.

Example 1: The second network element sends an identifier of the terminal device and third indication information to the first network element, where the third indication information indicates the exception event of the service flow. The first network element determines, based on the identifier of the terminal device and the third indication information, to report the fourth indication information to the second network element. To help the second network element determine that the cause indicated by the fourth indication information corresponds to exception time indicated by the third indication information, a message used to carry the fourth indication information and a message used to carry the third indication information may further carry eighth indication information. For example, the eighth indication information may alternatively be a message type information element that is defined in this application and that is configured to carry the eighth indication information.

Example 2: The second network element may send a third request message to the first network element, where the third request message is for requesting the cause of the exception event of the service flow.

Optionally, in steps S101 and S103, the first network element and the terminal device may communicate with each other by using data plane signaling, or may communicate with each other by using control plane signaling.

When communication is performed by using the control plane signaling, forwarding may be performed between the first network element and the terminal device via at least one third network element. For example, the third network element herein may be a core network element device and/or a radio access network element device.

The following separately provides examples of communication performed between the first network element and the terminal device by using control plane signaling in S101 and S103.

In S101, to help the first network element indicate, to the third network element, that the first indication information is used by the terminal device to measure the performance indicator of the service flow, the first network element may further send fifth indication information to the third network element, where the fifth indication information indicates that the first indication information is used by the terminal device to measure the performance indicator of the service flow.

For example, the fifth indication information and the first indication information may be carried in a same message or different messages. The fifth indication information may be, for example, indication information in a message that carries the first indication information, or the fifth indication information may be a message type information element that is defined in this application and that is configured to carry the first indication information.

In S103, to help the terminal device indicate, to the third network element, that the second indication information indicates the measurement result of the performance indicator of the service flow to the first network element, the terminal device may further send sixth indication information to the third network element. The sixth indication information indicates that the second indication information indicates the measurement result of the performance indicator of the service flow to the first network element.

For example, the sixth indication information and the second indication information may be carried in a same message or different messages. The sixth indication information may be, for example, indication information in a message that carries the second indication information, or the sixth indication information may be a message type information element that is defined in this application and that is configured to carry the second indication information.

Optionally, the third network element may include one or more network elements. In this case, one or more third network elements may forward the foregoing information or message.

Optionally, to help determine that the first indication information corresponds to the second indication information, the message used to carry the first indication information and the message used to carry the second indication information may further carry seventh indication information. The first network element may determine, based on the seventh indication information in the sent and received messages, that the measurement result indicated by the second indication information corresponds to the performance indicator indicated by the first indication information. For example, the seventh indication information may alternatively be a message type information element that is defined in this application and that is configured to carry the seventh indication information.

For example, the first network element may be a domain WTEMF, and the second network element may be a cross domain WTEMF. Alternatively, the first network element may be an NWDAF, and the second network element may be a domain WTEMF. The terminal device may be configured to provide a wireless access service.

In this embodiment of this application, the measurement result of the associated performance indicator of the service flow is collected and analyzed for the exception event of the service flow of the terminal device, to obtain a cause of the exception event of the service flow, so that fault location analytics can be automatically performed on the terminal device, to quickly locate and handle a fault and recover normal service provisioning. The measurement result of the performance indicator at a service flow level is collected and analyzed, so that a case in which fault demarcation cannot be performed and a case in which fault location is inaccurate are avoided, and more precise fault demarcation and location can be performed, thereby quickly handling the fault, and recovering the normal service provisioning.

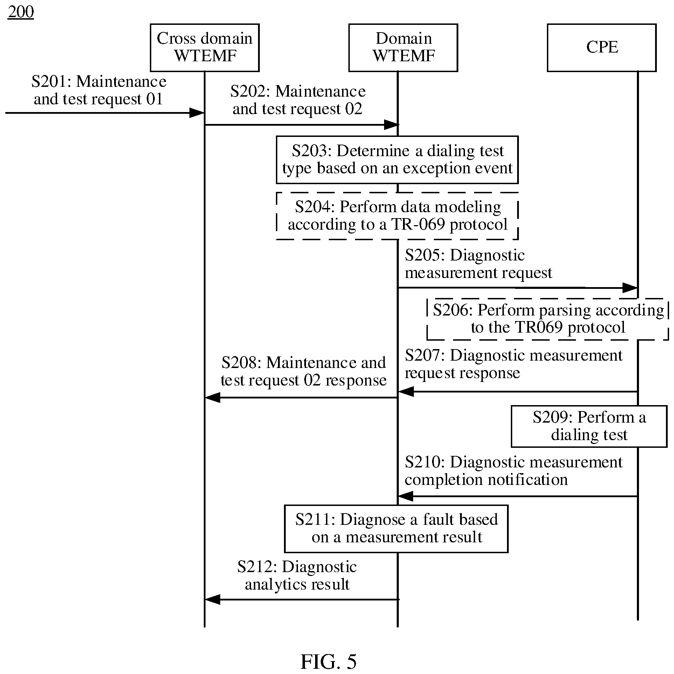

FIG. 5 is a diagram of a fault location method 200 according to this application.

In the method 200, information exchange between a domain WTEMF and CPE may be performed according to or not according to a terminal management protocol such as TR-069. It needs to be noted that in this application, an example in which a terminal device is the CPE is used for description. However, this is not limited in this application.

In a possible Implementation 1, information exchange is performed between the domain WTEMF and the CPE not according to the terminal management protocol such as TR-069. The implementation includes S201 to S203, S205, and S207 to S212 in FIG. 5.

S201: A cross domain WTEMF receives a maintenance and test request 01 from an external of a cross domain management system, or receives a maintenance and test request 01 from another management function inside the cross domain management system, where the maintenance and test request 01 includes an exception event, and the maintenance and test request 01 indicates the CPE to execute a dialing test job.

For example, the maintenance and test request 01 may explicitly indicate the CPE to execute the dialing test job, or the cross domain WTEMF may determine that a device associated with the exception event is connected to the CPE, and therefore may determine, based on the exception event, that the CPE needs to be indicated to execute the dialing test job.

It should be understood that the exception event herein may be understood as a fault, for example, a fault of a service type. The exception event herein may include an exception event at a device granularity and/or an exception event at a service flow granularity. The exception event at the device granularity includes at least one of the following: unexpected restart of the terminal device, poor terminal location coverage, or a disconnection of the terminal device; and the exception event at the service flow granularity includes at least one of the following: video freezing corresponding to one or more service flows or a control delay exception corresponding to the one or more service flows.

For example, the unexpected restart of the terminal device herein may be that the terminal device is automatically started due to a non-human factor; the poor terminal location coverage herein may be that a wireless base station signal received by the terminal device is poor because a location of the terminal device is blocked by a building or the like; and the disconnection of the terminal device herein may be that a wireless connection between the terminal device and a wireless base station is disconnected. The video freezing corresponding to the one or more service flows herein may be: an artifact or freezing occurring in a video played by a video service server; and the control delay exception corresponding to the one or more service flows herein may be that a delay of a control command sent by a control service server to the terminal device reaching the terminal device is large (for example, greater than an average data transmission delay) or response time after the terminal device receives the command is long (for example, greater than an average response duration).

It should be further understood that, the CPE executes the dialing test job, so that a specific network segment in which a fault causes the exception event may be determined. The fault may be a CPE fault, a radio network element fault, a core network element device fault, or another network element fault.

Optionally, the maintenance and test request 01 may optionally carry a maintenance and test job identifier.

S202: The cross domain WTEMF sends a maintenance and test request 02 to the domain WTEMF.

The cross domain WTEMF may determine, in this implementation described in S201, that the terminal that needs to perform a dialing test is the CPE, and send the maintenance and test request 02 to the domain WTEMF, where the maintenance and test request 02 carries a CPE ID, the maintenance and test job identifier, and the exception event.

The CPE ID is a device identifier for identifying the terminal, for example, an equipment serial number (equipment serial number, ESN)/electronic serial number, a device IP address, a system architecture evolution (system architecture evolution, SAE) temporary mobile subscriber identity (SAE temporary mobile subscriber identity, S-TMSI), a globally unique temporary subscriber identity (globally unique temporary UE identity, 5G-GUTI), or the like. The CPE ID may be determined by the domain WTEMF after the CPE performs the dialing test.

The maintenance and test job identifier may be obtained by the domain WTEMF from the maintenance and test request 01, or may be allocated by the domain WTEMF to the current dialing test job. The maintenance and test job identifier identifies the corresponding maintenance and test job, and may be an identifier of a string of characters or a number identifier.

For details about the exception event, refer to descriptions of S201.

For example, in addition to the foregoing information element information, the maintenance and test request 02 may further include some basic configuration parameters for performing the dialing test, for example, information such as a measurement periodicity, measurement start time, measurement end time, a measurement result reporting manner, and a measurement result reporting periodicity for performing the dialing test by the CPE. These results are sent to the CPE through the following steps. For details about the parameters, refers to descriptions in 3GPP TS 28.554. Details are not described again in this specification.

For example, to transmit parameter information in the maintenance and test request 02, S202 may be implemented by enhancing performance job creation (Create MeasJob Operation), or may be implemented by defining another message type, for example, by defining a management service (MnS, Management Service) type message such as a diagnostic analytics management service (Diagnostics MnS), or another type. This is not limited in this application.

S203: The domain WTEMF determines a dialing test type based on the exception event.

For example, the domain WTEMF determines, based on a message type of the maintenance and test request 02, that the CPE needs to be indicated to perform the dialing test, or determines, based on indication information in the maintenance and test request 02, that the CPE needs to be indicated to perform the dialing test.

The exception event is the exception event in the maintenance and test request 02.

The dialing test type herein includes an operation type of the dialing test performed by the CPE or a KPI that needs to be measured.

The operation type of the dialing test performed by the CPE includes at least one of the following: IP packet internet groper (packet internet groper, Ping) diagnostics (which may be used to measure a network delay such as a network transmission delay, a network packet loss rate, or another performance indicator), speed measurement (which is used to measure a network rate), heartbeat check (which is used to detect a network link connectivity status), and the like. It needs to be noted that all operation types that have same functions as the IP address ping diagnostic, the speed measurement, and the heartbeat check herein fall within the protection scope of this application.

In an example, the domain WTEMF determines, based on the exception event at the device granularity, the operation type of the dialing test performed by the CPE. For example, the domain WTEMF may determine, based on the exception event at the device granularity and a correspondence between the exception event at the device granularity and the operation type of the dialing test performed by the CPE, the operation type of the dialing test performed by the CPE. The correspondence may be, for example, that if a control delay of the terminal device is large, the operation type of the dialing test that needs to be performed is the speed measurement; or if the terminal device is disconnected, the operation type of the dialing test that needs to be performed is the heartbeat detection or the IP address ping diagnostics.

The measured KPI may include at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

In another example, the domain WTEMF determines, based on the exception event at the device granularity, the KPI that needs to be measured by the CPE, or the domain WTEMF determines, based on the exception event at the service flow granularity, the KPI that needs to be measured by the CPE. For example, the domain WTEMF may determine, based on the exception event at the service flow granularity and a correspondence between the exception event at the service flow granularity and the KPI that needs to be measured by the CPE, the KPI that needs to be measured by the CPE. The correspondence may be, for example, that the video freezing corresponding to the service flow corresponds to at least one of the following performance indicators of the service flow: an uplink packet data convergence protocol packet loss count and a downlink packet data convergence protocol packet loss count. The control delay exception corresponding to the service flow corresponds to at least one of the following performance indicators of the service flow: an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface. For another example, the domain WTEMF may determine, based on the exception event at the device granularity and a correspondence between the exception event at the device granularity and the KPI that needs to be measured by the CPE, the KPI that needs to be measured by the CPE. The correspondence may be, for example, that the unexpected restart of the terminal device corresponds to at least one of the following performance indicators at the device granularity: start time of the terminal device, a quantity of restart times, and the like; the poor coverage of the terminal device corresponds to at least one of the following performance indicators at the device granularity: reference signal received power, reference signal received quality, and the like; and the disconnection of the terminal device corresponds to at least one of the following performance indicators at the device granularity: a quantity of uplink or downlink packet retransmissions, an uplink or a downlink packet loss rate, and the like.

S205: The domain WTEMF sends a diagnostic measurement request message to the CPE.

The diagnostic measurement request message includes the dialing test type and the basic configuration parameters for performing the dialing test mentioned in S202.

S207: The CPE sends a diagnostic measurement request response message to the domain WTEMF.

As an example, after receiving the diagnostic measurement request message, the CPE sends the diagnostic measurement request response message to the domain WTEMF.

As another example, the CPE determines, based on the KPI in the diagnostic measurement request message, whether to accept or reject the diagnostic measurement request, and sends the diagnostic measurement request response message to the domain WTEMF, where the response message carries the indication information. For example, if the CPE determines to accept the diagnostic measurement request, the indication information indicates "yes".

As yet another example, the diagnostic measurement request includes this type of this operation that needs to be performed by the CPE. The CPE determines, based on this operation type, the KPI that needs to be measured, determines, based on the KPI that needs to be measured, to accept or reject the diagnostic measurement request, and sends the diagnostic measurement request response message to the domain WTEMF, where the response message carries the indication information. For example, if the CPE determines to accept the diagnostic measurement request, the indication information indicates "yes".

It should be understood that, when the domain WTEMF receives the diagnostic measurement request response message from the CPE, creation of the maintenance and test job is basically completed.

S208: The domain WTEMF sends a maintenance and test request 02 response message to the cross domain WTEMF.

The maintenance and test request 02 response message indicates, to the cross domain WTEMF, a maintenance and test job creation result, namely, a creation success or failure. Optionally, if the maintenance and test job creation result is the creation failure, the maintenance and test request 02 response message needs to carry a cause value. The cause value herein may indicate that the terminal device is offline, the dialing test type is unsupported, or the like.

S209: The CPE performs the dialing test.

It needs to be noted that step numbers of S208 and S209 do not limit an execution sequence of the steps. S208 may be performed before or after S209.

For example, the CPE performs the dialing test based on the dialing test type received in S205, for example, performs this operation indicated by the operation type in the dialing test type, or measures the KPI in the dialing test type.

S210: The CPE sends a diagnostic measurement completion notification to the domain WTEMF.

After completing the dialing test, the CPE reports a measurement result to the domain WTEMF, that is, sends the diagnostic measurement completion notification. This notification message includes a measurement result of the dialing test performed by the terminal or a measurement statistical result of the measured KPI.

S211: The domain WTEMF diagnoses the fault based on the measurement result.

The domain WTEMF receives the diagnostic measurement completion notification to obtain the measurement result.

The following describes implementations of how the domain WTEMF performs diagnostics based on measurement results of the KPI at the device granularity and the KPI at the service flow granularity.

Implementation 1: The domain WTEMF performs diagnostics based on the measurement result of the KPI at the device granularity.

Based on the measurement result of the KPI at the device granularity, the domain WTEMF analyzes and determines the network segment in which the fault occurs (such as the CPE fault, the radio network element fault, a transport network fault, or a core network fault), that is, completes fault demarcation.

For example, when performing the dialing test, the CPE may send a ping packet to a server with a fixed IP address. The ping packet is sent to a wireless network through an air interface, next reaches a UPF through an N3 interface between the wireless network and a core network, and then is transmitted to the server with the fixed IP address. The domain WTEMF receives the reported measurement result obtained by performing the dialing test in the foregoing implementation, and may determine the network segment at which the fault occurs.

It should be understood that, if the CPE is faulty, the CPE can still perform measurement in a dialing test manner and report the measurement result.

Further, the domain WTEMF may analyze a fault cause based on the measurement result.

For example, the domain WTEMF may determine the fault cause based on a correspondence between the measurement result and the fault cause. Alternatively, the domain WTEMF may perform diagnostic analytics based on a method such as an artificial intelligence (artificial intelligence, AI) machine learning algorithm. This is not specifically limited in this application.

Implementation 2: The domain WTEMF performs diagnostics based on the measurement results of the KPIs at the device granularity and the service flow granularity.

The domain WTEMF determines, based on Implementation 1, that the CPE is faulty, or the domain WTEMF determines, based on Implementation 1, that no network segment is faulty.

Further, the domain WTEMF may perform diagnostic analytics on a terminal fault type based on the measurement result at the service flow granularity, and identify a root fault cause of the CPE, that is, complete fault location analytics.

For example, the domain WTEMF may perform fault location based on the measurement result of the KPI reported by the CPE, that is, analyze the fault cause of the CPE. For example, there may be two different cases. Case 1: If the CPE is faulty, the fault cause may be analyzed based on the measurement result of the KPI at the service flow granularity and/or the device granularity. Case 2: If the CPE is not faulty, the fault cause may be further analyzed based on the measurement result of the KPI at the service flow granularity.

The following provides an example for Case 2. The domain WTEMF determines that the CPE is faulty. For example, the CPE provides a wireless access function for three terminals (for example, two cameras and one PLC controller), where the three terminals respectively correspond to different service flows. The domain WTEMF may further determine, based on a measurement result of a KPI at a service flow granularity, a service flow whose performance indicator is exceptional (for example, greater than or less than or equal to a threshold), to determine a faulty terminal in the three terminals based on the terminal corresponding to the service flow.

For example, the domain WTEMF may determine the fault cause based on a correspondence between the measurement result and the fault cause. Alternatively, the domain WTEMF may perform diagnostic analytics based on a method such as an AI machine learning algorithm. This is not specifically limited in this application.

S212: The domain WTEMF sends a diagnostic analytics result to the cross domain WTEMF.

The domain WTEMF reports the diagnostic analytics result based on the analytics in S211, where the diagnostic analytics result includes the maintenance and test job identifier, a fault demarcation result, a fault location result, and the like.

Specifically, if the fault demarcation is a problem of the CPE, the analytics result carries fault information of the CPE. The fault information includes but is not limited to at least one of the following: a fault type (for example, a disconnection of the terminal, an excessively high device temperature, or poor terminal location coverage), fault occurrence time, a possible fault cause, a fault severity level (for example, minor, major, or critical), and a fault status (for example, recovered or unrecovered).

For example, the domain WTEMF may send this information to the cross domain WTEMF by using a reportStreamData message or a file.

In this embodiment of this application, the dialing test type corresponding to a terminal fault and identifier information of a terminal that performs a dialing test are added to a service interface of the domain WTEMF, and a function of the domain WTEMF is extended, so that the domain WTEMF supports terminal fault diagnostic analytics based on performance data reported by the terminal. Related performance data can be targetedly collected for problems of different dialing test types, and fault diagnostic analytics of the terminal device can be quickly implemented based on a data collection result. Therefore, fault location is automatically performed on the terminal device, and labor costs are reduced, to quickly handle the fault, and recover normal service provisioning.

It should be understood that a common scenario in which a terminal sends a fault is as follows: A terminal 1 (for example, the foregoing CPE) accesses a network, the terminal 1 provides a wireless access service for one or more terminals 2 (for example, the foregoing camera or PLC controller), at least one terminal 2 is faulty, and the terminal 1 is not faulty. In this scenario, the following cases may occur when the network performs fault location and demarcation. Case 1: Because the terminal 2 does not belong to a network segment (for example, cannot access an operator network), if the network measures only a performance indicator at a device granularity for an exception event during the fault demarcation, the network may demarcate that the terminal 1 is faulty, and cannot precisely demarcate that the terminal 2 is faulty. In addition, after the terminal 1 is demarcated, the fault location may be inaccurate. Case 2: When the terminal 1 provides the wireless access service for a plurality of terminals 2, the at least one terminal 2 may be faulty, but a measurement result of a performance indicator of the terminal 1 is normal. Specifically, the measurement result of the performance indicator of the terminal 1 includes an exception part corresponding to the faulty terminal 2 and a part corresponding to another normal terminal 2. Therefore, it is possible that the measurement result that is of the performance indicator of the terminal 1 and that is collected by the network does not display an exception. In this case, the network cannot detect the exception of the terminal 2 and cannot demarcate the fault to a specific network segment.

For the scenario, considering that each terminal 2 has a corresponding service flow, in the communication method in this application, the network measures the performance indicator at the service flow granularity for the exception event, so that a case in which fault demarcation cannot be performed and a case in which the fault location is inaccurate can be avoided, and more precise fault demarcation and location can be performed. This facilitates quicker fault handling, and recovers normal service provisioning.

In the foregoing solution, the domain WTEMF determines the dialing test type based on the exception event. Optionally, during specific implementation, the cross domain WTEMF may alternatively perform this step (S203), and then send the dialing test type to the domain WTEMF in the maintenance and test request 02.

In a possible Implementation 2, information exchange is performed between the domain WTEMF and the CPE according to the terminal management protocol such as TR-069.

In the possible Implementation 2, S201 to S212 in FIG. 5 are included. For S201 to S203, S205, and S207 to S212, respectively refer to descriptions of S201 to S203, S205, and S207 to S212 in the possible Implementation 1. In comparison with the possible Implementation 1, the following operations are added to S205, S207, and S210.

Differences between the possible Implementation 2 and the possible Implementation 1 are as follows.

S204: The domain WTEMF performs, according to the TR-069 protocol, data modeling on a dialing test type and basic configuration parameters for performing a dialing test, to obtain a TR-069 packet.

It needs to be noted that the TR-069 protocol is used as an example for description in this embodiment of this application. The TR-069 protocol herein may alternatively be replaced with any one of terminal management protocols supported by the terminal device, such as MQTT and LWM2M. This is not limited in this application.

A diagnostic measurement request in S205 includes the TR-069 packet.

S206: The CPE performs data parsing data according to TR-069.

The CPE receives a request message from the domain WTEMF, parses the message according to the TR-069 protocol, determines, based on an RPC operation type, a processing operation that needs to be performed (that is, the terminal performs the dialing test or performance KPI data collection based on the operation type), and determines, based on an information element parameter in the RPC operation, a KPI type that needs to be measured.

S210: The CPE may report a measurement result based on an inform (Inform) RPC instruction of the TR-069 protocol. Correspondingly, the domain WTEMF may alternatively parse a TR-069 packet to obtain the measurement result.

This embodiment of this application has same beneficial effects as the possible Implementation 1. Further, information exchange is performed between the domain WTEMF and the CPE according to the TR-069 protocol, and a core network element device does not need to process information forwarded by the core network element device. On this basis of quickly and precisely locating the fault cause, complexity of the core network element device is further reduced, and power consumption of an entire system is reduced.

The foregoing describes the possible Implementations 1 and 2. In the two possible implementations, the domain WTEMF exchanges information with the CPE through a data plane path, for example, encapsulates TR-069 packet data into an IP packet. The domain WTEMF may alternatively exchange information with the CPE through a control signaling path, for example, forwards data via the core network element device. The following describes an implementation in which information exchange is performed through the control signaling path.

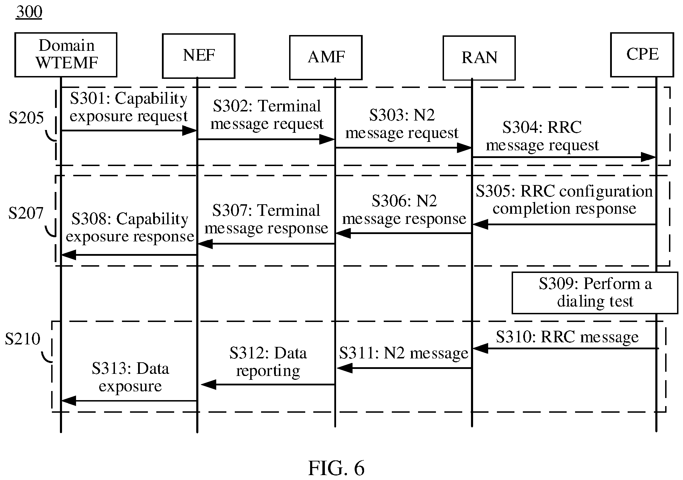

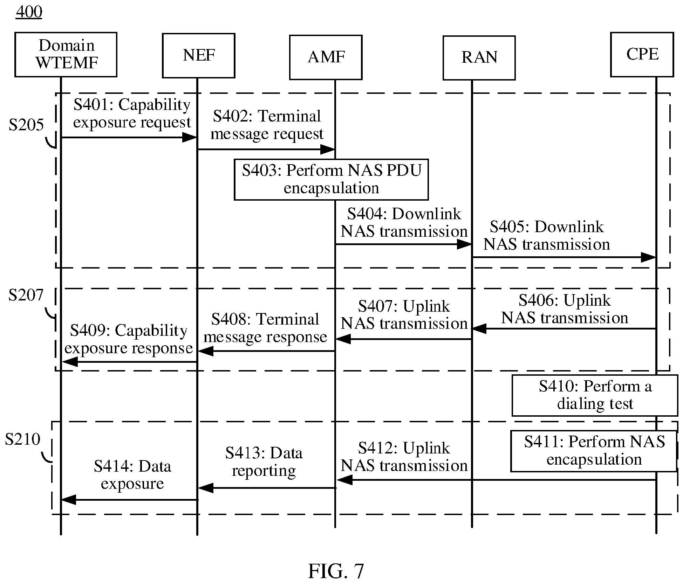

In a possible Implementation 3, S201, S202, S203, S208, S209, S211, and S212 are the same as those in the possible Implementation 1. Information exchange between the domain WTEMF and the CPE in the foregoing possible Implementation 1, that is, steps S205, S207, and S210, may be respectively replaced with corresponding steps in FIG. 6 or FIG. 7.

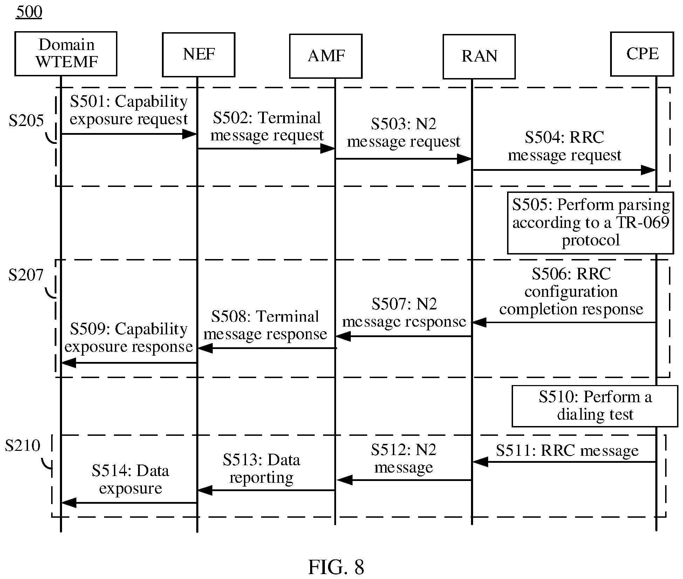

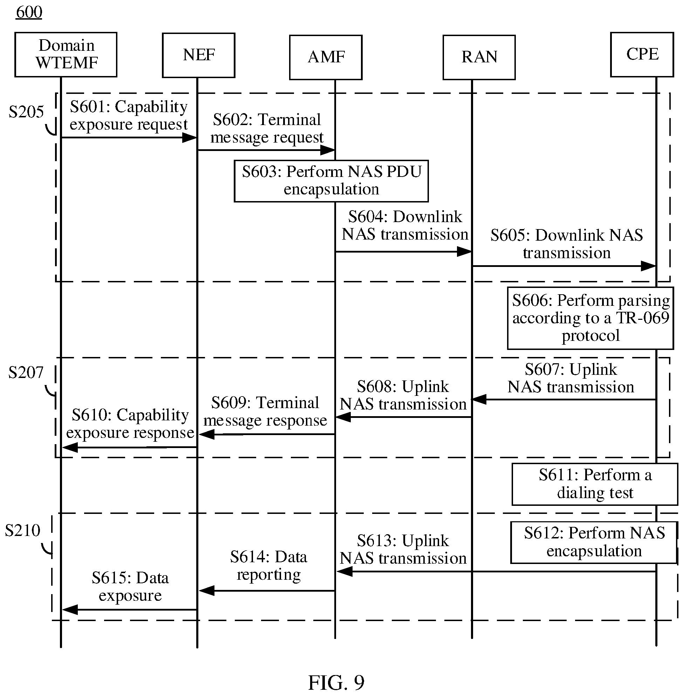

In a possible Implementation 4, S201 to 204, S206, S208, S209, S211, and S212 are the same as those in the possible Implementation 2. Information exchange between the domain WTEMF and the CPE in the foregoing possible Implementation 2, that is, steps S205, S207, and S210, may be performed in an implementation shown in FIG. 8 or FIG. 9.

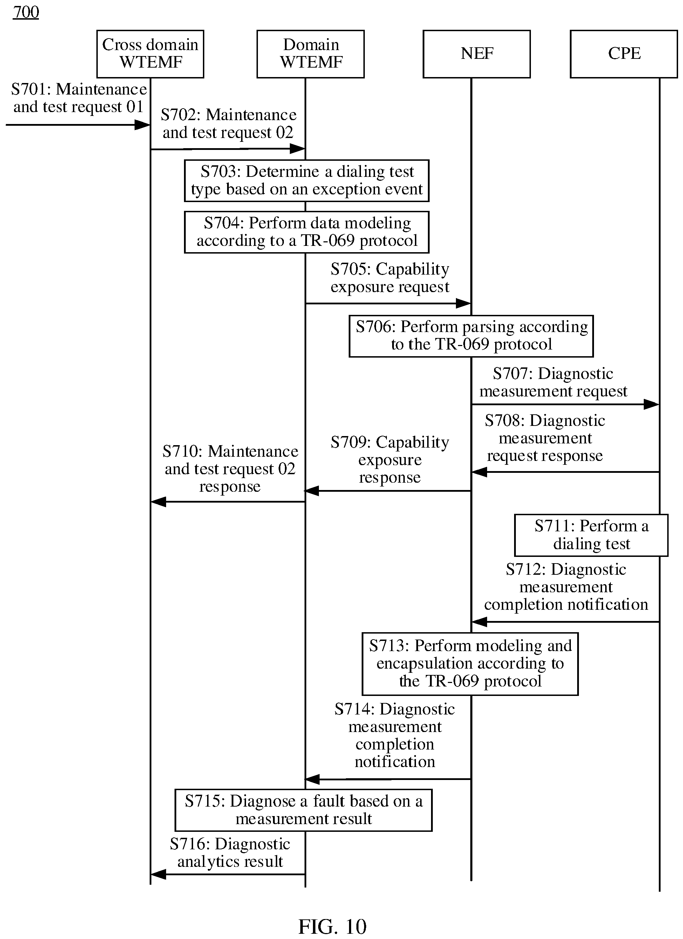

In a possible Implementation 5, the foregoing possible Implementations 2 and 4 are implementations in which the domain WTEMF performs parsing and encapsulation according to the TR-069 protocol. During specific implementation, another network element may alternatively perform parsing and encapsulation according to the TR-069 protocol. With reference to FIG. 10, the following describes in detail an implementation in which an NEF replaces the CPE to perform parsing and encapsulation according to the TR-069 protocol.

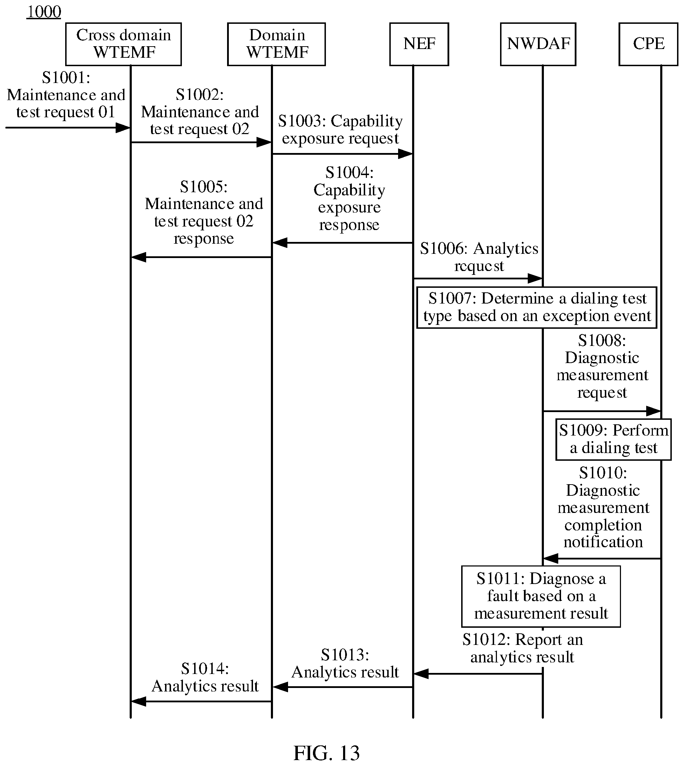

In a possible Implementation 6, the foregoing possible Implementations 1 to 5 are all implementations in which the domain WTEMF diagnoses the fault based on the measurement result reported by the CPE. During specific implementation, another network element may alternatively diagnose the fault based on the measurement result reported by the CPE. With reference to FIG. 13, the following describes in detail an implementation in which an NWDAF replaces the domain WTEMF to diagnose the fault based on the measurement result reported by the CPE.

The following first describes in detail the possible Implementation 3 of the method 200 with reference to FIG. 6 and FIG. 7. As shown in FIG. 6 and FIG. 7, information forwarding is performed between a domain WTEMF and CPE via an NEF, an AMF, and a RAN. After receiving a request from the NEF, the AMF may separately send, to the CPE based on an access stratum (access stratum, AS) signaling-based method or a non-access stratum (non-access stratum, NAS) signaling-based method, related information about a dialing test performed by a terminal.

It should be understood that, in the NAS signaling-based method (NAS based), the AMF directly encapsulates, by using a NAS protocol data unit (protocol data unit, PDU), the information that needs to be sent to the CPE, and then transmits the information to the CPE by using an N2 interface signaling message between the AMF and the RAN and an air interface signaling message between the CPE and the RAN. During the transmission, the RAN network element transparently transmits the NAS PDU sent by the AMF, and does not perceive specific transmission content.

It should be further understood that, in the AS signaling-based method (AS based), the AMF directly sends, to the RAN network element by using an N2 interface signaling message between the AMF and the RAN, the information that needs to be sent to the CPE, and the RAN network element then transmits the information to the CPE by using an air interface signaling message between the CPE and the RAN. During the transmission, the information that needs to be sent to the CPE is explicitly included in the message as an information element of the related signaling message, and the RAN network element can also perceive specific transmitted message content.

FIG. 6 is a diagram of a fault location method 300 according to this application.

With reference to FIG. 6, the following describes a case in which the AMF sends, to the CPE based on AS signaling, the related information about the dialing test performed by the terminal in the possible Implementation 3 of the method 200. S205 in the possible Implementation 1 is replaced with S301 to S304, S207 in the possible Implementation 1 is replaced with S305 to S308, and S210 in the possible Implementation 1 is replaced with S310 to S313.

S301: A domain WTEMF sends a capability exposure request message to an NEF.

The capability exposure request message carries a CPE ID, a maintenance and test job identifier, an action order (ActionOrder), a dialing test type, basic configuration parameters for performing the dialing test, and the like.

The action order may be understood as a CPE dialing test command indication, and a function of the action order is to indicate that a function of the request message is to perform dialing test processing performed by the CPE, so that a network element (such as the NEF, the AMF, or a RAN) that receives the capability exposure request message sends an information element in the message to the CPE based on the action order. For meanings of other parameter information elements, refer to related descriptions in the method 200.

It needs to be noted that the action order may alternatively be replaced with another message type with a similar function, or the action order may alternatively be replaced with indication information with a similar function. All implementations having the same function as the action order fall within the protection scope of this application.

The capability exposure request message may be an Nnef interface application policy creation request (Nnef_ApplyPolicy_Create request) message of the NEF, or may be a service request of the NEF defined in this application, for example, an Nnef interface CPE diagnostics job creation request (Nnef_CPEDiagnosticsJob_Create request) message. A specific message type is not limited in this application.

It should be understood that in a 5th generation communication system (5th generation system, 5GS) architecture, information exchange may be directly performed between network elements through a service-based interface, and an Nnef interface is a service-based interface for interaction between the NEF and another network element. For example, currently, a message transmitted between the NEF and the another network element through the Nnef interface may be the Nnef_ApplyPolicy_Create request message. Alternatively, in this embodiment of this application, a message transmitted between the NEF and the another network element through the Nnef interface may be the Nnef_CPEDiagnosticsJob_Create request message defined in this application.

S302: The NEF sends a terminal message request (UE message request) message to the AMF.

The request message includes information about the capability exposure request message in S301 and the action order.

For example, the terminal message request (UE message request) message may be an Namf interface communication UE context transfer (Namf_Communication_UEContextTransfer) message of the AMF, or may be a defined service of the AMF, for example, an Namf interface communication CPE diagnostics job creation request (Namf_Communication_ CPEDiagnosticsJobCreation request) request message. A specific message type is not limited in this application.

It should be understood that, in the 5th generation communication system (5th generation system, 5GS) architecture, information exchange may be directly performed between the network elements through the service-based interface, and an Namf interface is a service-based interface for interaction between the AMF and another network element. For example, currently, a message transmitted between the AMF and the another network element through the Namf interface may be the Namf_Communication_UEContextTransfer message. Alternatively, in this embodiment of this application, a message transmitted between the AMF and the another network element through the Namf interface may be the Namf_Communication_ CPEDiagnosticsJobCreation request message defined in this application. S303: The AMF sends an N2 message request (N2 message request) message to the RAN.

The N2 message includes information in a terminal message request message.

The N2 message request message may be a UE information transfer (UE Information Transfer) message. To transmit the foregoing parameter information, an information element parameter of the UE information transfer message needs to be extended. Alternatively, an N2 interface signaling message may be defined. A specific message type is not limited in this application. However, if a message is defined to specially transmit the information, the action order may not be carried in step S303, and the RAN network element may determine a function of the message based on a message type of the defined message, and perform a corresponding processing operation.

S304: The RAN sends a radio resource control (radio resource control, RRC) message request (RRC message request) message to the CPE.

The RAN network element performs information forwarding based on the indication of the action order in the N2 message request message or the message type of the message defined in S303, and sends, to the CPE by using the RRC message request message, the information in the N2 message request message received in S305.

The RRC message request message herein may be an RRC configuration (RRC reconfiguration) message or a UE information request message. Therefore, to transmit the foregoing parameter information, an information element parameter of the RRC reconfiguration message needs to be extended. Alternatively, an air interface signaling message may be defined. A specific message type is not limited in this application.

S305: The CPE sends an RRC configuration completion response message to the RAN.

The CPE receives the RRC message request message sent by the RAN network element, completes a corresponding dialing test measurement job configuration, and sends a job creation processing result (for example, a job creation success, a job creation failure, and a failure cause) to the RAN network element. The completion response message in S305 corresponds to the request message in S304. The response message carries the maintenance and test job identifier and the job creation result.

S306: The RAN sends an N2 message response message to the AMF.

After receiving feedback of the job creation result from the CPE, the RAN network element sends the job creation processing result to the AMF. The response message in S306 corresponds to the request message in S303. The response message carries the maintenance and test job identifier and the job creation result that are received by the RAN in S305.

S307: The AMF sends a terminal message response message to the NEF.

If receiving feedback of the job creation result from the RAN network element, the AMF feeds back the creation result to the NEF.

If the UE message request message in S302 is the Namf interface communication UE context transfer (Namf_Communication_UEContextTransfer) message of the AMF, the response message in S307 is an Namf interface communication UE context transfer (Namf_Communication_UEContextTransfer) acknowledgment message. If the UE message request message in S302 is the service of the AMF defined in this application, for example, the Namf interface communication CPE diagnostics job creation request (Namf_Communication_ CPEDiagnosticsJobCreation request) request message, the response message in S307 is an Namf interface communication CPE diagnostics job creation response (Namf_Communication_ CPEDiagnosticsJobCreation response) acknowledgment message.

S308: The NEF sends a capability exposure response message to the domain WTEMF.

If receiving feedback of the job creation result from the AMF, the NEF feeds back the creation result to the domain WTEMF. The response message is a response message of the capability exposure request message in S301. If there is the Nnef interface application policy creation request (Nnef_ApplyPolicy_Create request) message of the NEF in S301, there is an Nnef interface application policy creation response (Nnef_ApplyPolicy_Create response) message in S308. If there is the service request of the NEF defined in S301, for example, the Nnef interface communication CPE diagnostics job creation request (Nnef_CPEDiagnosticsJob_Create request) request message, there is an Nnef interface communication CPE diagnostics job creation response (Nnef_CPEDiagnosticsJob_Create response) message in S308.

S309: For details herein, refer to descriptions of S209.

S310: The CPE sends an RRC message to the RAN.

The CPE sends, to the RAN network element by using the RRC message (for example, a measurement report message or another defined message), a measurement result obtained in S309. The message carries a data report (dataReport), the maintenance and test job identifier, the CPE ID, and a dialing test measurement data result.

The data report may be understood as a data reporting indication, and a function of the data report indicates that a function of the message is to transmit the CPE dialing test measurement data result, and a network element (such as the AMF or the RAN) that receives the RRC message reports the measurement result in the message based on the indication.

It needs to be noted that the data report may alternatively be replaced with another message type with a similar function, or the data report may alternatively be replaced with indication information with a similar function. All implementations having the same function as the data report fall within the protection scope of this application.

S311: The RAN sends an N2 message to the AMF.

The RAN network element receives the measurement data result reported by the CPE, and sends, to the AMF by using an N2 interface message (for example, a data usage report (Data Usage Report) message or another defined message), the data report, the maintenance and test job identifier, the CPE ID, and the measurement result that are carried in the RRC message in S310.

S312: The AMF performs data reporting to the NEF.

After receiving this information in the N2 message reported by the RAN network element, the AMF determines to perform data reporting via the NEF and based on the indication of the data report or an AS message type in the N2 message, for example, based on an Namf interface event exposure notification (Namf_EventExposure_Notify) service interface message of the AMF, that is, by extending the Namf_EventExposure_Notify message based on a data reporting requirement. The message includes the data report, the maintenance and test job identifier, the CPE ID, and the measurement result.

S313: The NEF sends a data exposure message to the domain WTEMF.

The NEF sends, to the domain WTEMF through data exposure (Data exposure), the information reported by the AMF. In S313, data reporting may be performed by using an Nnef interface event exposure notification (Nnef_EventExposure_Notify) service interface message of the NEF, that is, by extending the Nnef_EventExposure_Notify message. Parameters in the message include the measurement result, the CPE ID, and the maintenance and test job identifier.

Optionally, in S312 and S313, after receiving the information reported by the RAN network element, the AMF may not indirectly send the reported information to the domain WTEMF via the NEF, but directly report the information to a wireless network element management system (element management system, EMS) in a standard manner of reporting performance data. Then, the EMS sends the information to the domain WTEMF.

It should be understood that, in a procedure in which the AMF sends, to the CPE based on the AS signaling, the related information about the dialing test performed by the terminal, the RAN does not process the information forwarded by the RAN, so that RAN processing complexity can be reduced, and power consumption of an entire system can be reduced.

In this embodiment of this application, control plane signaling of a core network is enhanced to support the dialing test job configuration and the reporting of the dialing test measurement result for the terminal, so that the related performance data can be targetedly collected for problems of different dialing test types, and fault location analytics of the terminal device can be quickly implemented based on a data collection result. Therefore, fault location is automatically performed on the terminal device, and labor costs are reduced, to quickly handle a fault, and recover normal service provisioning.

Further, similar to the method 200, a network measures a performance indicator at a service flow granularity for an exception event, so that a case in which fault demarcation cannot be performed and a case in which fault location is inaccurate can be avoided, and more precise fault demarcation and location can be performed. This facilitates quicker fault handling, and recovers normal service provisioning.

FIG. 7 is a diagram of a fault location method 400 according to this application.

With reference to FIG. 7, the following describes a case in which the AMF sends, to the CPE based on NAS signaling, the related information about the dialing test performed by the terminal in the possible Implementation 3 of the method 200. S205 in the possible Implementation 1 is replaced with S401 to S405, S207 in the possible Implementation 1 is replaced with S406 to S409, and S210 in the possible Implementation 1 is replaced with S411 to S414.

For S401 and S402, refer to corresponding descriptions of S301 and S302.

S403: The AMF performs NAS PDU encapsulation.

The AMF performs information forwarding based on the indication of an action order in a terminal message request message. To transmit a dialing test type, a collected data reporting periodicity, a collected data reporting address, a data collection periodicity, data collection start time, data collection end time, a CPE ID, and a maintenance and test job identifier in the terminal message request message to UE by using the NAS PDU, a NAS message type needs to be added, or message content needs to be enhanced for this current NAS message. The AMF encapsulates, in the NAS message, an information element, the CPE ID, and the maintenance and test job identifier in the terminal message request message.

S404: The AMF performs downlink NAS transmission to a RAN.

The AMF sends an encapsulated NAS PDU in S403 to the RAN network element by using an N2 interface downlink non-access stratum transfer (downlink non-access stratum Transfer, DL NAS Transfer) message.

S405: The RAN performs downlink NAS transmission to the CPE.

The RAN network element receives the DL NAS transfer message from the AMF, and sends the NAS PDU in the DL NAS transfer message in S404 to the CPE by using an air interface downlink information transfer (downlink Information Transfer, DL Information Transfer) message.

S406: The CPE performs uplink NAS transmission to the RAN.

The CPE receives a request sent by the RAN network element, completes a corresponding dialing test measurement job configuration, and sends a job creation processing result (for example, a job creation success, a job creation failure, and a failure cause) to the RAN network element by using an uplink information transfer (uplink Information Transfer, UL Information Transfer) message. The message carries the maintenance and test job identifier and the job creation result.

S407: The RAN performs uplink NAS transmission to the AMF.

After receiving feedback of the job creation result from the CPE, the RAN network element sends the job creation processing result to the AMF by using an uplink non-access stratum transfer (uplink non-access stratum Transfer, UL NAS Transfer) message. The message carries the maintenance and test job identifier and the job creation result.

S408: The AMF sends a terminal message response message to an NEF.

If receiving feedback of the job creation result from the RAN network element, the AMF feeds back the creation result to the NEF. If the UE message request (UE message request) message in S402 is an Namf interface communication UE context transfer Namf_Communication_UEContextTransfer message of the AMF, the response message in S408 is an Namf interface communication UE context transfer (Namf_Communication_UEContextTransfer) acknowledgment message. If the UE message request message in S402 is a service of the AMF defined in this application, for example, an Namf interface communication CPE diagnostic job creation request (Namf_Communication_ CPEDiagnosticsJobCreation request) message, the response message in S408 is an Namf interface communication CPE diagnostics job creation response (Namf_Communication_ CPEDiagnosticsJobCreation response) message.

S409: The NEF sends a capability exposure response to a domain WTEMF.

After receiving feedback of the job creation result from the AMF, the NEF feeds back the job creation result to the domain WTEMF. This message is a response message for S401. If there is an Nnef interface application policy creation request (Nnef_ApplyPolicy_Create request) message of the NEF in S401, there is an Nnef interface application policy creation response (Nnef_ApplyPolicy_Create response) message in S409. If S401 is a service request of the NEF defined in this application, for example, an Namf interface communication CPE diagnostics job creation request (Nnef_CPEDiagnosticsJob_Create request) message, there is an Namf interface communication CPE diagnostics job creation response (Nnef_CPEDiagnosticsJob_Create response) message in S409.

S410: For details, refer to corresponding descriptions of S209.

S411: The AMF performs NAS encapsulation.

To transmit, to the AMF by using the NAS PDU, information such as a measurement result in S410, a NAS message type needs to be added, or message content needs to be enhanced for an existing NAS message. The CPE encapsulates the measurement result, the CPE ID, and the maintenance and test job identifier in the S411 in the NAS message.

S412: The CPE performs uplink NAS encapsulation to the RAN.

The CPE sends the encapsulated NAS PDU in S411 to the RAN network element by using the air interface UL information transfer message.

S413: The RAN performs data reporting to the AMF.

The RAN network element sends the NAS PDU to the AMF by using an N2 interface UL NAS transfer message.

S414: For details, refer to corresponding descriptions of S313.

This embodiment of this application has same beneficial effect as the method 300.

The foregoing describes in detail the possible Implementation 3 of the method 200 with reference to FIG. 6 and FIG. 7.

The following further describes in detail a possible Implementation 4 of the method 200 with reference to FIG. 8 and FIG. 9. As shown in FIG. 8 and FIG. 9, information forwarding is performed between a domain WTEMF and CPE via an NEF, an AMF, and a RAN. After receiving a request from the NEF, the AMF may separately send, to the CPE based on an AS signaling-based method or a NAS signaling-based method, related information about a dialing test performed by a terminal.

FIG. 8 is a diagram of a fault location method 500 according to this application.

With reference to FIG. 8, the following describes a case in which the AMF sends, to the CPE based on the AS signaling, the related information about the dialing test performed by the terminal in the possible Implementation 4 of the method 200. S205 in the possible Implementation 2 is replaced with S501 to S504, S207 in the possible Implementation 2 is replaced with S506 to S508, and S210 in the possible Implementation 2 is replaced with S510 to S513.

S501: A domain WTEMF sends a capability exposure request message to an NEF.

The capability exposure request message carries a CPE ID, a maintenance and test job identifier, a TR-069 protocol packet, and an action order. The TR-069 packet is an encapsulated packet obtained by performing, according to a terminal management protocol TR-069 protocol, modeling on a dialing test type and basic configuration parameters for performing a dialing test in S204 of the possible Implementation 2, and is transmitted between network elements as a whole in a manner of an information element. The action order is CPE dialing test command indication, and a function of the action order is to indicate that a function of the request message is to perform dialing test processing performed by the CPE, so that a network element (such as the NEF, the AMF, or the RAN) that receives the message sends the information element in the message to the CPE based on the indication.

The capability exposure request message may be an Nnef interface application policy creation request (Nnef_ApplyPolicy_Create request) message of the NEF, or may be a service request of the NEF defined in this application, for example, an Nnef interface CPE diagnostics job creation request (Nnef_CPEDiagnosticsJob_Create request) message. A specific message type is not limited in this application.

S502: The NEF sends a terminal message request (UE message request) message to the AMF.

The NEF performs information forwarding based on the indication of the action order in S501, and sends the TR-069 packet, the CPE ID, the maintenance and test job identifier, and the action order in S501 to the AMF.

The UE message request message herein may be an Namf interface communication UE context transfer (Namf_Communication_UEContextTransfer) message of the AMF, or may be a service of the AMF defined in this application, for example, an Namf interface communication CPE diagnostics job creation request (Namf_Communication_ CPEDiagnosticsJobCreation request) request message. A specific message type is not limited in this application.

S503: The AMF sends an N2 message request message to the RAN.

The AMF performs information forwarding based on the indication of the action order in the terminal message request message in S502, and sends the TR-069 packet, the CPE ID, the maintenance and test job identifier, and the action order in the terminal message request message to the AMF.

The N2 message request message herein may be a UE information transfer message. To transmit the foregoing parameter information, an information element parameter of the UE information transfer message needs to be extended. An N2 interface signaling message may alternatively be defined in this application. A specific message type is not limited in this application. However, if a message is defined to specially transmit the information, the action order may not be carried in S503, and the RAN network element may determine a function of the message based on a defined message name, and perform a corresponding processing operation.

S504: The RAN sends an RRC message request (RRC message request) message to the CPE.

The RAN network element performs information forwarding based on the indication of the action order in S503 or the message type of the message defined in S503, and sends the TR-069 packet, the CPE ID, the maintenance and test job identifier, and the action order in S503 to the CPE.

The RRC message request message herein may be an RRC reconfiguration message or a UE information request message. Therefore, to transmit the foregoing parameter information, an information element parameter of the RRC reconfiguration message needs to be extended. An air interface signaling message may alternatively be defined in this application. A specific message type is not limited in this application.

S505: The CPE parses the TR-069 packet. For details, refer to descriptions of S206.

After receiving the message from the RAN network element, the CPE parses the TR-069 packet in the message, and performs corresponding dialing test-related operation processing based on an RPC type and a parameter of the TR-069 protocol in the packet.

S506: The CPE sends an RRC configuration completion response message to the RAN.

The CPE receives the RRC message request message sent by the RAN network element, completes a corresponding dialing test measurement job configuration, and sends a job creation processing result (for example, a job creation success, a job creation failure, and a failure cause) to the RAN network element. The completion response message in S506 corresponds to the request message in S504. The response message carries the maintenance and test job identifier and the job creation result.

S507: The RAN sends an N2 message response message to the AMF.

After receiving feedback of the job creation result from the CPE, the RAN network element sends the job creation processing result to the AMF. The response message in S507 corresponds to the request message in S503. The response message carries the maintenance and test job identifier and the job creation result that are received by the RAN in S506.

S508: The AMF sends a terminal message response message to the NEF.

If receiving feedback of the job creation result from the RAN network element, the AMF feeds back the creation result to the NEF.

If the UE message request message in S502 is the Namf interface communication UE context transfer (Namf_Communication_UEContextTransfer) message of the AMF, the response message in S508 is an Namf interface communication UE context transfer (Namf_Communication_UEContextTransfer) acknowledgment message. If the UE message request message in S502 is the service of the AMF defined in this application, for example, an Namf interface communication CPE diagnostics job creation request (Namf_Communication_ CPEDiagnosticsJobCreation request) message, the response message in S508 is an Namf interface communication CPE diagnostics job creation response (Namf_Communication_ CPEDiagnosticsJobCreation response) message.

S509: The NEF sends a capability exposure response message to the domain WTEMF.

If receiving feedback of the job creation result from the AMF, the NEF feeds back the creation result to the domain WTEMF. The response message is a response message of the capability exposure request message in S501. If there is the Nnef interface application policy creation request (Nnef ApplyPolicy_Create request) message of the NEF in S501, there is an Nnef interface application policy creation response (Nnef_ApplyPolicy_Create response) message in S509. If there is the service request of the NEF defined in this application in S501, for example, an Nnef interface CPE diagnostics job creation request (Nnef_CPEDiagnosticsJob_Create request) message, there is an Nnef interface CPE diagnostics job creation response (Nnef_CPEDiagnosticsJob_Create response) message in S509.

S510: For details herein, refer to descriptions of S209.

S511: The CPE sends an RRC message to the RAN.

The CPE sends, to the RAN network element by using the RRC message (for example, a measurement report message or another defined message), data (that is, encapsulated into the TR-069 packet) encapsulated according to the TR-069 protocol in S510, where the message carries a data report (dataReport), the maintenance and test job identifier, the CPE ID, and a dialing test measurement data result. The data report is a data reporting indication, and a function of the data report is to indicate that a function of the message is to transmit the CPE dialing test measurement data result, so that a network element (such as the AMF or a gNB) that receives the message reports TR-069 packet in the message based on the indication. The TR-069 packet is a protocol packet that includes the CPE measurement result.

It needs to be noted that the data report may alternatively be replaced with another message type with a similar function, or the data report may alternatively be replaced with indication information with a similar function. All implementations having the same function as the data report fall within the protection scope of this application.

S512: The RAN sends an N2 message to the AMF.

The RAN network element receives the measurement data result reported by the CPE, and sends, to the AMF by using an N2 interface message (for example, a data usage report message or another defined message), the data report, the maintenance and test job identifier, the CPE ID, and the TR-069 packet that are carried in the RRC message in S511.

S513: The AMF performs data reporting to the NEF.

After receiving this information in the N2 message reported by the RAN network element, the AMF determines to perform data reporting (data report sending) via the NEF and based on the indication of the data report or an AS message type in the N2 message, for example, based on an Namf interface event exposure notification (Namf_EventExposure_Notify) service interface message of the AMF, that is, by extending the Namf_EventExposure_Notify message. The message includes the data report, the maintenance and test job identifier, the CPE ID, and the TR-069 packet.

S514: The NEF sends a data exposure message to the domain WTEMF.

The NEF sends, to the domain WTEMF through data exposure (data exposure), the information reported by the AMF. In S514, data reporting may be performed by using an Nnef interface event exposure notification (Nnef_EventExposure_Notify) service interface message of the NEF, that is, by extending the Nnef_EventExposure_Notify message. Parameters in the message include the TR-069 packet, the CPE ID, and the maintenance and test job identifier.

Optionally, in S513 and S514, after receiving the information reported by the RAN network element, the AMF may not indirectly send the reported information to the domain WTEMF via the NEF, but directly report the information to an EMS in a standard manner of reporting performance data. Then, the EMS sends the information to the domain WTEMF.

It should be understood that, in a procedure in which the AMF sends, to the CPE based on the AS signaling, the related information about the dialing test performed by the terminal, the RAN does not process the information forwarded by the RAN, so that RAN processing complexity can be reduced, and power consumption of an entire system can be reduced.

This embodiment of this application has same beneficial effects as the method 300. Further, information exchange is performed between the domain WTEMF and the CPE according to the TR-069 protocol, and a core network element device does not need to process information forwarded by the core network element device. On this basis of quickly and precisely locating the fault cause, complexity of the core network element device is further reduced, and power consumption of an entire system is reduced.

FIG. 9 is a diagram of a fault location method 600 according to this application.

With reference to FIG. 9, the following describes a case in which the AMF sends, to the CPE based on the NAS signaling, the related information about the dialing test performed by the terminal in the possible Implementation 4 of the method 200. S205 in the possible Implementation 2 is replaced with S601 to S605, S207 in the possible Implementation 2 is replaced with S607 to S610, and S210 in the possible Implementation 2 is replaced with S612 to S615.

For details of S601 and S602, refer to descriptions of S501 and S502.

S603: The AMF performs NAS PDU encapsulation.

The AMF performs information forwarding based on an indication of an action order in a terminal message request message. To transmit a TR-069 packet, a CPE ID, and a maintenance and test job identifier in the terminal message request message to UE by using the NAS PDU, a NAS message type needs to be added, or message content needs to be enhanced for this current NAS message. The AMF encapsulates, in the NAS message, the TR-069 packet, the CPE ID, and the maintenance and test job identifier in the terminal message request message.

S604: The AMF performs downlink NAS transmission to a RAN.

The AMF sends an encapsulated NAS PDU in S603 to the RAN network element by using an N2 interface DL NAS transfer message.

S605: The RAN performs downlink NAS transmission to the CPE.

The RAN network element receives the DL NAS transfer message from the AMF, and sends the NAS PDU in the DL NAS transfer message in S604 to CPE by using an air interface DL information transfer message.

S606: The CPE performs parsing according to a TR-069 protocol.

After receiving the message from the RAN network element, the CPE parses the NAS PDU in the message to obtain the TR-069 packet in the message, to perform parsing, and performs corresponding dialing test related operation processing based on an RPC type and a parameter of the TR-069 protocol in the packet.

S607: The CPE performs uplink NAS transmission to the RAN.

The CPE receives a request sent by the RAN network element, completes a corresponding dialing test measurement job configuration, and sends a job creation processing result (for example, a job creation success, a job creation failure, and a failure cause) to the RAN network element by using a UL information transfer. The message carries the maintenance and test job identifier and the job creation result.

S608: The RAN performs uplink NAS transmission to the AMF.

After receiving feedback of the job creation result from the CPE, the RAN network element sends the job creation processing result to the AMF by using a UL NAS transfer message. The message includes the maintenance and test job identifier and the job creation result.

S609: The AMF sends a terminal message response message to an NEF.

If receiving feedback of the job creation result from the RAN network element, the AMF feeds back the creation result to the NEF. If the UE message request message in S602 is an Namf interface communication UE context transfer (Namf_Communication_UEContextTransfer) message of the AMF, the response message in S609 is an Namf interface communication UE context transfer (Namf_Communication_UEContextTransfer) acknowledgment message. If the UE message request message in S602 is a service of the AMF defined in this application, for example, an Namf interface communication CPE diagnostics job creation request (Namf_Communication_ CPEDiagnosticsJobCreation request) message, the response message in S609 is an Namf interface communication CPE diagnostics job creation response (Namf_Communication_ CPEDiagnosticsJobCreation response) acknowledgment message.

S610: The NEF sends a capability exposure response to a domain WTEMF.

After receiving feedback of the job creation result from the AMF, the NEF feeds back the job creation result to the domain WTEMF. This message is a response message for S601. If there is an Nnef interface application policy creation request (Nnef_ApplyPolicy_Create request) message of the NEF in S601, there is an Nnef interface application policy creation response (Nnef_ApplyPolicy_Create response) message in S610. If there is a service request of the NEF defined in this application in S601, for example, an Nnef interface communication CPE diagnostics job creation request (Nnef_CPEDiagnosticsJob_Create request) request message, there is an Nnef interface communication CPE diagnostics job creation request (Nnef_CPEDiagnosticsJob_Create response) message in S610.

S611: For details, refer to corresponding descriptions of S209.

S612: The AMF performs NAS encapsulation.

To transmit, to the AMF by using the NAS PDU, information such as a measurement result in S611, a NAS message type needs to be added, or message content needs to be enhanced for an existing NAS message. The CPE encapsulates, in the NAS message, the TR-069 packet, the CPE ID, and the maintenance and test job identifier in S612.

S613: The CPE performs uplink NAS encapsulation to the RAN.

The CPE sends the encapsulated NAS PDU in S612 to the RAN network element by using the air interface UL information transfer message.

S614: The RAN performs data reporting to the AMF.

The RAN network element sends the NAS PDU to the AMF by using an N2 interface UL NAS transfer message.

S615: For details, refer to corresponding descriptions of S513.

This embodiment of this application has same beneficial effects as the method 500.

In addition, the foregoing possible Implementations 2 and 4 are implementations in which the domain WTEMF performs parsing and encapsulation according to the TR-069 protocol. During specific implementation, another network element may alternatively perform parsing and encapsulation according to the TR-069 protocol. With reference to FIG. 10, the following describes in detail an implementation in which the NEF replaces the CPE to perform parsing and encapsulation according to the TR-069 protocol.

FIG. 10 is a diagram of a fault location method 700 according to this application.

For S701 to S704, refer to corresponding descriptions of S201 to S204 in the possible Implementation 2.

For S705, refer to corresponding descriptions of S501 in the possible Implementation 2.

S706: The NEF performs data parsing according to TR-069.

The NEF receives a capability exposure request message from a domain WTEMF, parses the TR-069 packet, determines, based on an RPC operation type, a processing operation that needs to be performed (that is, a terminal performs a dialing test or collects performance KPI data based on the operation type), and determines a needed dialing test type based on an information element parameter in an RPC operation.

S707: The NEF sends a diagnostic measurement request to CPE.

There may be two possible implementations in S707. To be specific, in a procedure in which the NEF forwards the dialing test type to the CPE via an AMF and a RAN, after receiving the request from the NEF, the AMF may separately send, to the CPE based on an AS signaling-based method or a NAS signaling-based method, related information about the dialing test performed by the terminal.

### Implementation 1: AS-based signaling.

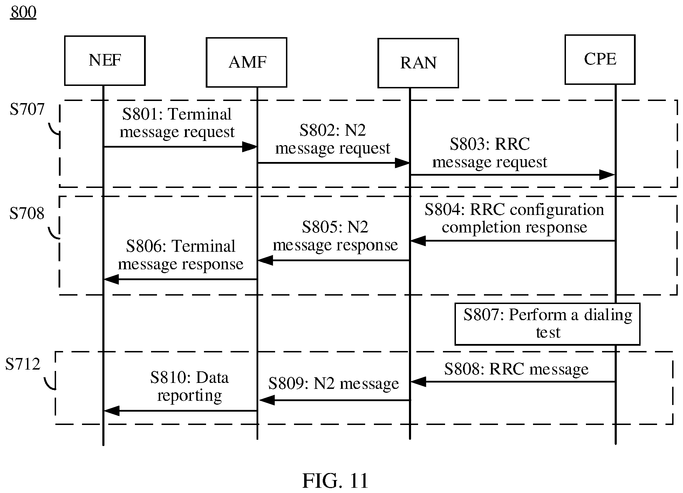

S707 may be replaced with S801 to S803 in FIG. 11.

FIG. 11 is a diagram of a fault location method 800 according to this application.

For S801 to S803, refer to descriptions of S302 to S304.

### Implementation 2: NAS-based signaling.

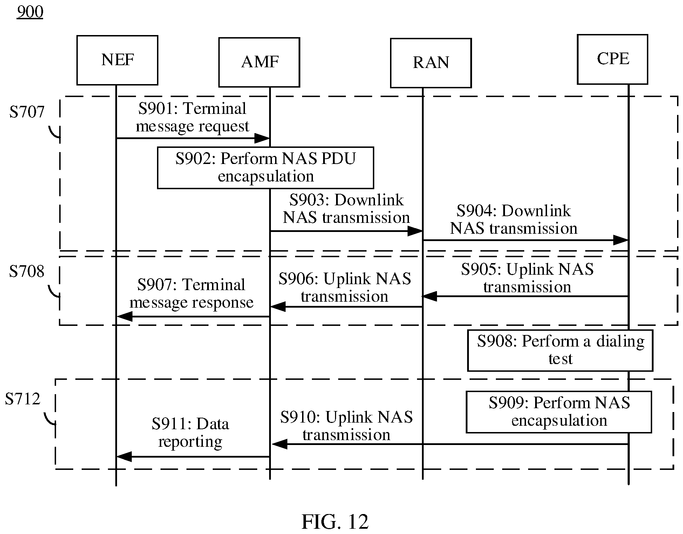

S707 may be replaced with S901 to S904 in FIG. 12.

FIG. 12 is a diagram of a fault location method 900 according to this application.

For S901 to S904, refer to descriptions of S402 to S405.

S708: The CPE sends a diagnostic measurement request response to the NEF.

There may be two possible implementations in S708, and it corresponds to S707. To be specific, in a procedure in which the CPE forwards a maintenance and test job creation result to the NEF via an AMF and a RAN, the CPE may separately send the maintenance and test job creation result to the NEF based on an AS signaling-based method or a NAS signaling-based method.

### Implementation 1: AS-based signaling, and it corresponds to Implementation 1 in S707.

S708 may be replaced with S804 to S806 in FIG. 11.

For S804 to S806, refer to corresponding descriptions of S305 to S307.

Implementation 2: NAS-based signaling, and it corresponds to Implementation 2 in S707.

S708 may be replaced with S904 to S906 in FIG. 12.

For S904 to S906, refer to corresponding descriptions of S406 to S408.

For S709, refer to corresponding descriptions of S409.

For S710, refer to corresponding descriptions of S208.

For S711, refer to corresponding descriptions of S209.

There may be two possible implementations in S712, and it corresponds to S707 and S708. To be specific, in a procedure in which the CPE forwards a measurement result to the NEF via the AMF and the RAN, the CPE may separately send the measurement result to the NEF based on the AS signaling-based method or the NAS signaling-based method.

### Implementation 1: AS-based signaling, and it corresponds to Implementation 1 in S707 and S708.

S712 may be replaced with S808 to S810 in FIG. 11.

For S808 to S810, refer to corresponding descriptions of S310 to S312.

Implementation 2: NAS-based signaling, and it corresponds to Implementation 2 in S707 and S708.

S712 may be replaced with S909 to S911 in FIG. 12.

For S909 to S911, refer to corresponding descriptions of S411 to S413.

S713: The NEF performs modeling and encapsulation on the measurement result according to the TR-069 protocol.

The NEF may encapsulate, based on an Inform RPC of the TR-069 protocol, the measurement result received in S712, and report a TR-069 packet.

For S714, refer to corresponding descriptions of S414.

For S715 and S716, refer to corresponding descriptions of S211 and S212.

A function of the NEF is enhanced, so that the NEF can encapsulate or parse the related packet according to the TR-069 protocol. This can reduce improvement of another core network element device, and reduce power consumption of an entire system. A function of processing a terminal management protocol is extended, and a related interface service between the NEF and the AMF, an N2 interface signaling message, and an air interface signaling message are enhanced to transmit information such as a fault dialing test type of a terminal and an identifier of the terminal performing a dialing test.

This embodiment of this application has same beneficial effects as the method 300.

In the foregoing possible Implementations 1 to 5 of the method 200, the domain WTEMF diagnoses the fault based on the measurement result reported by the CPE. With reference to FIG. 13, the following describes a possible Implementation 6, namely, an implementation in which an NWDAF replaces the domain WTEMF to diagnose the fault based on the measurement result reported by the CPE.

It should be understood that the domain WTEMF triggers maintenance and test processing on the CPE based on the maintenance and test request from the cross domain WTEMF, but the domain WTEMF does not perform a dialing test job configuration on the terminal, and does not perform fault demarcation and location analytics based on the measurement result of the dialing test performed by the CPE, but requests the NWDAF in a core network to perform terminal fault location analytics, that is, the core network is responsible for performing terminal fault location analytics. After receiving the maintenance and test request from the cross domain WTEMF, the domain WTEMF requests the core network for the terminal fault analytics result through capability exposure of the NEF. The NWDAF collects, based on this analytics request, the measurement result of the dialing test performed by the CPE, performs terminal fault analytics, and reports the analytics result to the domain WTEMF via the NEF.

FIG. 13 is a diagram of a fault location method 1000 according to this application.

For S1101 to S1102, refer to corresponding descriptions of S201 and S202.

S 1003: A domain WTEMF sends a capability exposure request message to an NEF.

The capability exposure request message carries a CPE ID, a maintenance and test job identifier, and a maintenance and test analytics indication, where the maintenance and test analytics indication is used to describe a requested behavior indication, or is for requesting to perform terminal fault location analytics.

The capability exposure request message may be an Nnef interface application policy creation request (Nnef_ApplyPolicy_Create request) message or an Nnef interface event exposure subscription request (Nnef_EventExposure_subscribe request) message of the NEF, or may be a service request of the NEF defined in this application, for example, an Nnef interface communication CPE diagnostics job creation request (Nnef_CPEDiagnosticsJob_Create request) message. A specific message type is not limited in this application.

S1004: The NEF sends a capability exposure response message to the domain WTEMF.

A maintenance and test job creation result is fed back in the capability exposure response message.

The capability exposure response message is a response message for S 1003. If there is the Nnef interface application policy creation request (Nnef_ApplyPolicy_Create request) message of the NEF in S1003, there is an Nnef interface application policy creation response (Nnef_ApplyPolicy_Create response) message in S1004. If there is the Nnef interface event exposure subscription request (Nnef_EventExposure_subscribe request) message of the NEF in S1003, there is an Nnef interface event exposure subscription response (Nnef_ EventExposure_subscribe response) message in S1004. If there is the service request of the NEF defined in this application in S1003, for example, the Nnef interface communication CPE diagnostics job creation request (Nnef_CPEDiagnosticsJob_Create request) message, there is an Nnef interface communication CPE diagnostics job creation response (Nnef_CPEDiagnosticsJob_Create response) message in S1004.

For S1005, refer to corresponding descriptions of S208.

S 1006: The NEF sends an analytics request message to an NWDAF.

The NEF requests a terminal fault maintenance and test analytics result from the NWDAF based on the maintenance and test analytics indication in S1003, that is, invokes an Nnwdaf interface analytics subscription (Nnwdaf_AnalyticsSubscription_Subscribe) service request message of the NWDAF. The message carries an information element parameter in S1003.

S1007: For details, refer to corresponding descriptions of S203, and the domain WTEMF in S203 is replaced with the NWDAF.

S1008: The NWDAF sends a diagnostic measurement request to CPE.

There may be two possible implementations in S1008. To be specific, in a procedure in which the NWDAF forwards the dialing test type to the CPE via an AMF and a RAN, after receiving the request from the NWDAF, the AMF may separately send, to the CPE based on an AS signaling-based method or a NAS signaling-based method, related information about the dialing test performed by the terminal.

### Implementation 1: AS-based signaling.

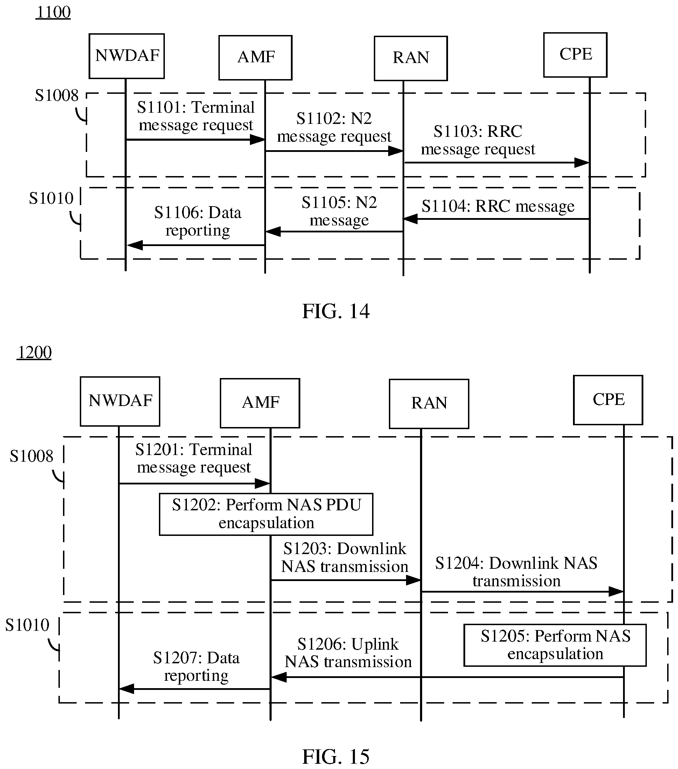

S1008 may be replaced with S1101 to S1103 in FIG. 14.

FIG. 14 is a diagram of a fault location method 1100 according to this application.

For S1101 to S1103, refer to descriptions of S302 to S304, and the NEF in S302 to S304 is replaced with the NWDAF.

### Implementation 2: NAS-based signaling.

S1008 may be replaced with S1201 to S1204 in FIG. 15.

FIG. 15 is a diagram of a fault location method 1200 according to this application.

For S1201 to S1204, refer to descriptions of S402 to S405, and the NEF in S402 to S405 is replaced with the NWDAF.

S1009: For details, refer to descriptions of S209.

S1010: The CPE sends a diagnostic measurement completion notification to the NWDAF.

There may be two possible implementations in S1010. To be specific, in a procedure in which the NWDAF forwards the dialing test type to the CPE via an AMF and a RAN, after receiving the request from the NWDAF, the AMF may separately send, to the CPE based on an AS signaling-based method or a NAS signaling-based method, related information about the dialing test performed by the terminal.

### Implementation 1: AS-based signaling.

S1010 may be replaced with S1104 to S1106 in FIG. 14.

For S1104 to S1106, refer to descriptions of S310 to S313, and the NEF in S310 to S313 is replaced with the NWDAF.

### Implementation 2: NAS-based signaling.

S1010 may be replaced with S1205 to S1207 in FIG. 15.

For S1205 to S1207, refer to descriptions of S411 to S414, and the NEF in S411 to S414 is replaced with the NWDAF.

S1011: For details, refer to corresponding descriptions of S211, and the domain WTEMF in S211 is replaced with the NWDAF.

S 1012: The NWDAF reports an analytics result to the NEF.

The NWDAF sends the analytics result to the NEF by invoking an Nnwdaf interface analytics subscription notification (Nnwdaf_AnalyticsSubscription_Notify) service request message of the NEF. The message further carries the CPE ID and the maintenance and test job identifier.

S 1013: The NEF sends the analytics result to the domain WTEMF.

The NEF sends, to the domain WTEMF through data exposure (data exposure), the information reported by the NWDAF. In this step, an Nnef interface event exposure notification (Nnef_EventExposure_Notify) service message of the NEF may be used, that is, an input parameter of the Nnef_EventExposure_Notify message is extended, to include the analytics result, the CPE ID, and the maintenance and test job identifier.

S1014: For details, refer to corresponding descriptions of S212.

Optionally, there may alternatively another implementation in the method 1000. Before S1003, the domain WTEMF has performed fault demarcation, and determines that a faulty network element is the CPE. In S1011, the NWDAF may perform only fault location.

In this embodiment of this application, the NWDAF performs fault location. In this way, related performance data can be collected targetedly for problems of different maintenance and test types, and fault location analytics can be quickly implemented on a terminal device based on a data collection result, so that fault location is automatically implemented on the terminal device. This can further reduce resource consumption of an interface between the domain WTEMF and the NEF due to reporting of a large amount of measurement data.

The solutions in this application may be applied to detection of an exception fault in a 5G toB scenario, or may be applied to detection of a network capability before an E2E network is enabled. For example, a delay of the E2E network is measured through a dialing test performed by the terminal, to evaluate a delay performance level that can be achieved by the network.

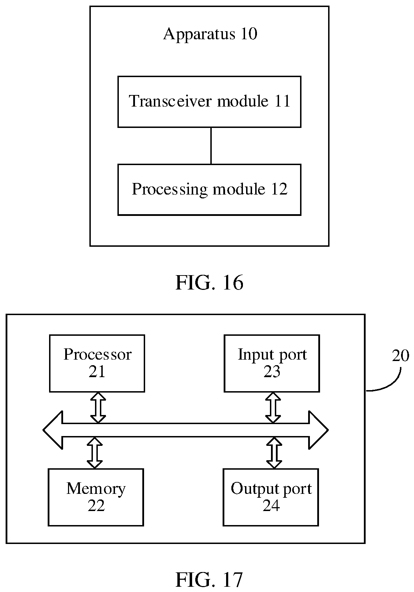

With reference to FIG. 1 to FIG. 15, the foregoing describes in detail the methods provided in embodiments of this application. With reference to FIG. 16 and FIG. 17, the following describes in detail apparatuses provided in embodiments of this application.

FIG. 16 is a block diagram of a fault location apparatus according to an embodiment of this application. As shown in FIG. 16, the apparatus 10 may include a transceiver module 11 and a processing module 12.

The transceiver module 11 may be configured to receive information sent by another apparatus, or may be configured to send information to another apparatus. For example, the transceiver module receives second indication information or sends first indication information. The processing module 12 may be configured to: perform content processing of the apparatus, for example, analyze the first indication information.

In a possible design, the apparatus 10 may correspond to the first network element or the domain WTEMF or the NWDAF in the foregoing method embodiments.

Specifically, the apparatus 10 may correspond to the first network element or the domain WTEMF or the NWDAF in the method 100 to the method 1200 in embodiments of this application. The apparatus 10 may include modules configured to perform operations performed by the first network element or the domain WTEMF or the NWDAF in the corresponding methods. In addition, units in the apparatus 10 are separately configured to implement the operations performed by the first network element or the domain WTEMF or the NWDAF in the corresponding methods.

For example, when the apparatus 10 corresponds to the first network element in the method 100, the transceiver module 11 is configured to perform steps S101, S103, and S104, and the processing module 12 is configured to perform step S104.

For example, when the apparatus 10 corresponds to the domain WTEMF in the method 200, the transceiver module 11 is configured to perform steps S202, S205, S207, S208, S210, and S212, and the processing module 12 is configured to perform S203, S204, and S211.

For example, when the apparatus 10 corresponds to the domain WTEMF in the method 300, the transceiver module 11 is configured to perform steps S301, S308, and S313.

For example, when the apparatus 10 corresponds to the domain WTEMF in the method 400, the transceiver module 11 is configured to perform steps S401, S409, and S414.

For example, when the apparatus 10 corresponds to the domain WTEMF in the method 500, the transceiver module 11 is configured to perform steps S501, S509, and S514.

For example, when the apparatus 10 corresponds to the domain WTEMF in the method 600, the transceiver module 11 is configured to perform steps S601, S610, and S615.

For example, when the apparatus 10 corresponds to the domain WTEMF in the method 700, the transceiver module 11 is configured to perform steps S702, S705, S709, S714, and S716, and the processing module 12 is configured to perform S703, S704, and S715.

For example, when the apparatus 10 corresponds to the NWDAF in the method 1000, the transceiver module 11 is configured to perform steps S1006, S1008, S1010, and S1012, and the processing module 12 is configured to perform S1007 and S1011.

For example, when the apparatus 10 corresponds to the NWDAF in the method 1100, the transceiver module 11 is configured to perform steps S1101 and S1106.

For example, when the apparatus 10 corresponds to the NWDAF in the method 1200, the transceiver module 11 is configured to perform steps S1201 and S1207.

In another possible design, the apparatus 10 may correspond to the second network element, the cross domain WTEMF, or the domain WTEMF in the foregoing method embodiments.

Specifically, the apparatus 10 may correspond to a network device in the method 100 to the method 1200 according to embodiments of this application. The apparatus 10 may include modules configured to perform operations performed by the second network element, the cross domain WTEMF, or the domain WTEMF in the corresponding methods. In addition, units in the apparatus 10 are separately configured to implement the operations performed by the second network element, the cross domain WTEMF, or the domain WTEMF in the corresponding methods.

For example, when the apparatus 10 corresponds to the cross domain WTEMF in the method 200, the transceiver module 11 is configured to perform steps S201, S202, S208, and S212.

For example, when the apparatus 10 corresponds to the cross domain WTEMF in the method 700, the transceiver module 11 is configured to perform steps S701, S702, S710, and S716.

For example, when the apparatus 10 corresponds to the domain WTEMF in the method 1000, the transceiver module 11 is configured to perform steps S1001, S1002, S1005, and S1014.

Specifically, the apparatus 10 may correspond to the terminal device or the CPE in the method 100 to the method 1200 according to embodiments of this application. The apparatus 10 may include modules configured to perform operations performed by the terminal device or the CPE in the corresponding methods. In addition, units in the apparatus 10 are separately configured to implement the operations performed by the terminal device or the CPE in the corresponding methods.

For example, when the apparatus 10 corresponds to the terminal device in the method 100, the transceiver module 11 is configured to perform steps S101 and S103, and the processing module 12 is configured to perform S102.

For example, when the apparatus 10 corresponds to the CPE in the method 200, the transceiver module 11 is configured to perform steps S205, S207, and S210, and the processing module 12 is configured to perform S206 and S209.

For example, when the apparatus 10 corresponds to the CPE in the method 300, the transceiver module 11 is configured to perform steps S304, S305, and S310, and the processing module 12 is configured to perform S309.

For example, when the apparatus 10 corresponds to the CPE in the method 400, the transceiver module 11 is configured to perform steps S405, S406, and S412, and the processing module 12 is configured to perform S410.

For example, when the apparatus 10 corresponds to the CPE in the method 500, the transceiver module 11 is configured to perform steps S504, S506, and S511, and the processing module 12 is configured to perform S505 and S510.

For example, when the apparatus 10 corresponds to the CPE in the method 600, the transceiver module 11 is configured to perform steps S605, S607, and S613, and the processing module 12 is configured to perform S606, S611, and S612.

For example, when the apparatus 10 corresponds to the CPE in the method 700, the transceiver module 11 is configured to perform steps S707, S708, and S712, and the processing module 12 is configured to perform S711.

For example, when the apparatus 10 corresponds to the CPE in the method 800, the transceiver module 11 is configured to perform steps S803, S804, and S808, and the processing module 12 is configured to perform S807.

For example, when the apparatus 10 corresponds to the CPE in the method 900, the transceiver module 11 is configured to perform steps S904, S905, and S909, and the processing module 12 is configured to perform S908.

For example, when the apparatus 10 corresponds to the CPE in the method 1000, the transceiver module 11 is configured to perform steps S1008 and S1010, and the processing module 12 is configured to perform S1009.

For example, when the apparatus 10 corresponds to the CPE in the method 1100, the transceiver module 11 is configured to perform steps S1103 and S1104.

For example, when the apparatus 10 corresponds to the CPE in the method 1200, the transceiver module 11 is configured to perform steps S1204 and S1207, and the processing module 12 is configured to perform S1205.

FIG. 17 is a diagram of an apparatus 20 according to an embodiment of this application.

In a possible design, the apparatus 20 may be a first network element, a domain WTEMF, a second network element, a cross domain WTEMF, an NWDAF, or CPE, or may be a chip, a chip system, or the like located on the first network element, the domain WTEMF, the second network element, the cross domain WTEMF, the NWDAF, or the CPE.

The apparatus 20 may include a processor 21 (namely, an example of a processing module) and a memory 22. The memory 22 is configured to store instructions. The processor 21 is configured to execute the instructions stored in the memory 22, to enable the apparatus 20 to implement steps performed by the devices in the foregoing possible designs in the methods corresponding to FIG. 1 to FIG. 7.

Further, the apparatus 20 may further include an input port 23 (namely, an example of a transceiver module) and an output port 24 (namely, another example of the transceiver module). Further, the processor 21, the memory 22, the input port 23, and the output port 24 may communicate with each other through an internal connection path, to transmit a control signal and/or a data signal. The memory 22 is configured to store a computer program. The processor 21 may be configured to: invoke the computer program from the memory 22 and run the computer program, to control the input port 23 to receive a signal, and control the output port 24 to send a signal, to complete steps performed by the terminal device, the radio access network element device, the UE, or the base station in the foregoing method. The memory 22 may be integrated into the processor 21, or may be disposed separately from the processor 21.

Optionally, if the apparatus 20 is a communication device, the input port 23 is a receiver, and the output port 24 is a transmitter. The receiver and the transmitter may be a same physical entity or different physical entities. When being the same physical entity, the receiver and the transmitter may be collectively referred to as a transceiver.

Optionally, if the apparatus 20 is a chip or a circuit, the input port 23 is an input interface, and the output port 24 is an output interface.

In an implementation, it may be considered that functions of the input port 23 and the output port 34 are implemented by using a transceiver circuit or a chip dedicated for transceiving. It may be considered that the processor 21 is implemented by using a dedicated processing chip, a processing circuit, a processor, or a general-purpose chip.

In another implementation, it may be considered that the device provided in this embodiment of this application is implemented by using a general-purpose computer. To be specific, program code for implementing functions of the processor 21, the input port 23, and the output port 24 is stored in the memory 22, and a general-purpose processor implements the functions of the processor 21, the input port 23, and the output port 24 by executing the code in the memory 22.

The modules or units in the apparatus 20 may be configured to perform actions or processing processes performed by a device (for example, the terminal device) that performs random access in the foregoing method. To avoid repetition, detailed descriptions thereof are omitted herein.

For concepts, explanations, detailed descriptions, and other steps of the apparatus 20 that are related to the technical solutions provided in embodiments of this application, refer to the descriptions of the content in the foregoing methods or other embodiments. Details are not described herein again.

It should be understood that, the processor in this embodiment of this application may be a central processing unit (CPU, central processing unit), or may be another general-purpose processor, a digital signal processor (DSP, digital signal processor), an application-specific integrated circuit (application-specific integrated circuit, ASIC), a field programmable gate array (field programmable gate array, FPGA), another programmable logic device, discrete gate or transistor logic device, or discrete hardware device, or the like. The general-purpose processor may be a microprocessor, or the processor may be any conventional processor or the like.

An embodiment of this application further provides a computer-readable storage medium. The computer-readable storage medium stores computer instructions used to implement the method performed by the first network element, the domain WTEMF, the second network element, the cross domain WTEMF, the NWDAF, or the CPE in the foregoing method embodiment.

For example, when the computer instructions are executed by a computer, the computer is enabled to implement the method performed by the first network element, the domain WTEMF, the second network element, the cross domain WTEMF, the NWDAF, or the CPE in the foregoing method embodiment.

An embodiment of this application further provides a computer-readable storage medium. The computer-readable storage medium stores computer instructions used to implement the method performed by the first network element, the domain WTEMF, the second network element, the cross domain WTEMF, the NWDAF, or the CPE in the foregoing method embodiment.

For example, when the computer program is executed by a computer, the computer is enabled to implement the method performed by the first network element, the domain WTEMF, the second network element, the cross domain WTEMF, the NWDAF, or the CPE in the foregoing method embodiment.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware, firmware, or any combination thereof. When software is used for implementation, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible to the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification usually indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the foregoing described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A fault location method, comprising:
sending, by a first network element, first indication information to a terminal device,
wherein the first indication information indicates a performance indicator of a service flow of the terminal device, and the performance indicator of the service flow is associated with an exception event of the service flow;
receiving, by the first network element, second indication information from the terminal device, wherein the second indication information indicates a measurement result of the performance indicator of the service flow; and
analyzing, by the first network element, the second indication information, to obtain a cause of the exception event of the service flow.

2. The method according to claim 1, wherein
the exception event of the service flow comprises at least one of the following: video freezing corresponding to the service flow and a control delay exception corresponding to the service flow.

3. The method according to claim 1 or 2, wherein
the performance indicator of the service flow comprises at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

4. The method according to claim 1, wherein the method further comprises:
determining, by the first network element, the performance indicator of the service flow based on the exception event of the service flow.

5. The method according to claim 4, wherein the determining, by the first network element, the performance indicator of the service flow based on the exception event of the service flow comprises:
determining, by the first network element, the performance indicator of the service flow based on the exception event of the service flow and a correspondence between the exception event of the service flow and the performance indicator of the service flow.

6. The method according to claim 5, wherein the correspondence between the exception event of the service flow and the performance indicator of the service flow comprises:
video freezing corresponding to the service flow corresponds to at least one of the following performance indicators of the service flow: an uplink packet data convergence protocol packet loss count and a downlink packet data convergence protocol packet loss count; and
a control delay exception corresponding to the service flow corresponds to at least one of the following performance indicators of the service flow: an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

7. The method according to any one of claims 1 to 6, wherein
the method further comprises:
receiving, by the first network element, an identifier of the terminal device and third indication information from a second network element, wherein the third indication information indicates the exception event of the service flow; and
the sending, by a first network element, first indication information to a terminal device comprises:
sending, by the first network element, the first indication information to the terminal device based on the identifier of the terminal device and the third indication information.

8. The method according to any one of claims 1 to 4, wherein the method further comprises:
receiving, by the first network element, an identifier of the terminal device and the first indication information from a second network element.

9. The method according to claim 7 or 8, wherein the method further comprises:
sending, by the first network element, fourth indication information to the second network element, wherein the fourth indication information indicates the cause of the exception event of the service flow.

10. The method according to any one of claims 1 to 9, wherein the sending, by a first network element, first indication information to a terminal device comprises:
directly sending, by the first network element, the first indication information to the terminal device, or sending, by the first network element, the first indication information to the terminal device via a third network element, wherein the third network element comprises a core network element device and a radio access network device.

11. The method according to any one of claims 1 to 10, wherein the receiving, by the first network element, second indication information from the terminal device comprises:
directly receiving, by the first network element, the second indication information from the terminal device, or receiving, by the first network element, the second indication information from the terminal device via the third network element, wherein the third network element comprises the core network element device and the radio access network device.

12. A fault location method, comprising:
receiving, by a terminal device, first indication information from a first network element, wherein the first indication information indicates a performance indicator of a service flow of the terminal device, and the performance indicator of the service flow is associated with an exception event of the service flow;
measuring, by the terminal device, the performance indicator of the service flow based on the first indication information, to obtain a measurement result of the performance indicator of the service flow; and
sending, by the terminal device, second indication information to the first network element, wherein the second indication information indicates the measurement result of the performance indicator of the service flow.

13. The method according to claim 12, wherein
the exception event of the service flow comprises at least one of the following: video freezing corresponding to the service flow and a control delay exception corresponding to the service flow.

14. The method according to claim 12 or 13, wherein
the performance indicator of the service flow comprises at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

15. A fault location method, comprising:
sending, by a second network element, an identifier of a terminal device and third indication information to a first network element, wherein the third indication information indicates an exception event of a service flow of the terminal device; and
receiving, by the second network element, fourth indication information from the first network element, wherein the fourth indication information indicates a cause of the exception event of the service flow, the cause is determined based on a measurement result of a performance indicator of the service flow, and the performance indicator of the service flow is associated with the exception event of the service flow.

16. A fault location method, comprising:
determining, by a second network element, a performance indicator of a service flow based on an exception event of the service flow;
sending, by the second network element, first indication information to a first network element, wherein the first indication information indicates the performance indicator of the service flow of a terminal device, and the performance indicator is used to determine a cause of the exception event of the service flow; and
receiving, by the second network element, fourth indication information from the first network element, wherein the fourth indication information indicates the cause of the exception event of the service flow.

17. The method according to claim 15 or 16, wherein
the exception event of the service flow comprises at least one of the following: video freezing corresponding to the service flow and a control delay exception corresponding to the service flow.

18. The method according to any one of claims 15 to 17, wherein
the performance indicator of the service flow comprises at least one of the following: an uplink packet data convergence protocol packet loss count, a downlink packet data convergence protocol packet loss count, an uplink air interface transmission delay, a downlink air interface transmission delay, a quantity of packet data convergence protocol packets with an uplink air interface transmission delay greater than a first threshold, a delay of processing a downlink packet by a user plane function network element, a delay of processing a downlink packet by the terminal device, a delay of processing a downlink packet by a radio access network element device, a quantity of downlink packets on an N3 interface with a delay greater than a second threshold, and a transmission delay of a downlink packet on an N3 interface.

19. The method according to any one of claims 16 to 18, wherein the determining, by a second network element, a performance indicator of a service flow based on an exception event of the service flow comprises:
determining, by the second network element, the performance indicator of the service flow based on the exception event of the service flow and a correspondence between the exception event of the service flow and the performance indicator of the service flow.

20. The method according to claim 19, wherein
the correspondence between the exception event of the service flow and the performance indicator of the service flow comprises:
the video freezing corresponding to the service flow corresponds to at least one of the following performance indicators of the service flow: the uplink packet data convergence protocol packet loss count and the downlink packet data convergence protocol packet loss count; and
the control delay exception corresponding to the service flow corresponds to at least one of the following performance indicators of the service flow: the uplink air interface transmission delay, the downlink air interface transmission delay, the quantity of packet data convergence protocol packets with an uplink air interface transmission delay greater than the first threshold, the delay of processing the downlink packet by the user plane function network element, the delay of processing the downlink packet by the terminal device, the delay of processing the downlink packet by the radio access network element device, the quantity of downlink packet on the N3 interface with a delay greater than the second threshold, and the transmission delay of the downlink packet on the N3 interface.

21. A fault location method, comprising:
sending, by a first network element, first indication information to a terminal device,
wherein the first indication information indicates a performance indicator of a service flow of the terminal device, and the performance indicator of the service flow is associated with an exception event of the service flow;
measuring, by the terminal device, the performance indicator of the service flow based on the first indication information, to obtain a measurement result of the performance indicator of the service flow;
sending, by the terminal device, second indication information to the first network element, wherein the second indication information indicates the measurement result of the performance indicator of the service flow; and
analyzing, by the first network element, the second indication information, to obtain a cause of the exception event of the service flow.

22. The method according to claim 21, wherein the method further comprises:
determining, by the first network element, the performance indicator of the service flow based on the exception event of the service flow.

23. A fault location method, comprising:
sending, by a second network element, an identifier of a terminal device and third indication information to a first network element, wherein the third indication information indicates an exception event of a service flow of the terminal device;
sending, by the first network element, first indication information to the terminal device based on the identifier of the terminal device and the third indication information;
measuring, by the terminal device, a performance indicator of the service flow based on the first indication information, to obtain a measurement result of the performance indicator of the service flow;
sending, by the terminal device, second indication information to the first network element, wherein the second indication information indicates the measurement result of the performance indicator of the service flow;
analyzing, by the first network element, the second indication information, to obtain a cause of the exception event of the service flow; and
sending, by the first network element, fourth indication information to the second network element, wherein the fourth indication information indicates the cause of the exception event of the service flow.

24. A fault location method, comprising:
determining, by a second network element, a performance indicator of a service flow based on an exception event of the service flow;
sending, by the second network element, first indication information to a first network element, wherein the first indication information indicates the performance indicator of the service flow of a terminal device, and the performance indicator is used to determine a cause of the exception event of the service flow;
sending, by the first network element, the first indication information to the terminal device, wherein the first indication information indicates the performance indicator of the service flow of the terminal device, and the performance indicator of the service flow is associated with the exception event of the service flow;
measuring, by the terminal device, the performance indicator of the service flow based on the first indication information, to obtain a measurement result of the performance indicator of the service flow;
sending, by the terminal device, second indication information to the first network element, wherein the second indication information indicates the measurement result of the performance indicator of the service flow;
analyzing, by the first network element, the second indication information, to obtain the cause of the exception event of the service flow; and
sending, by the first network element, fourth indication information to the second network element, wherein the fourth indication information indicates the cause of the exception event of the service flow.

25. A fault location system, comprising a first network element and a terminal device,
wherein the first network element is configured to perform the method according to any one of claims 1 to 11, and the terminal device is configured to perform the method according to any one of claims 12 to 14.

26. A fault location system, comprising a first network element, a second network element, and a terminal device, wherein the first network element is configured to perform the method according to any one of claims 1 to 11, the terminal device is configured to perform the method according to any one of claims 12 to 14, and
the second network element is configured to perform the method according to any one of claims 16 to 20, or the second network element is configured to perform the method according to any one of claims 15 and 17 to 20.

27. A communication apparatus, comprising:
a module configured to implement the method according to any one of claims 1 to 11;
a module configured to implement the method according to any one of claims 12 to 14; or
a module configured to implement the method according to any one of claims 15 to 20.

28. A communication apparatus, comprising:
a processor and a memory, wherein
the memory is configured to store a computer program; and
the processor is configured to execute the computer program stored in the memory, to enable the communication apparatus to perform the method according to any one of claims 1 to 11, the method according to any one of claims 12 to 14, the method according to any one of claims 15 and 17 to 20, or the method according to any one of claims 16 to 20.

29. A computer-readable storage medium, wherein the computer-readable storage medium stores instructions, and when the computer instructions are run on a computer, the computer is enabled to perform the method according to any one of claims 1 to 11, the method according to any one of claims 12 to 14, the method according to any one of claims 15 and 17 to 20, or the method according to any one of claims 16 to 20.

30. A chip, comprising:
a memory, configured to store a computer program; and
a processor, configured to read and execute the computer program stored in the memory, wherein when the computer program is executed, the processor performs the method according to any one of claims 1 to 11, the method according to any one of claims 12 to 14, the method according to any one of claims 15 and 17 to 20, or the method according to any one of claims 16 to 20.

31. A computer program product, wherein the computer program product comprises computer program code, and when the computer program code is run on a computer, the computer is enabled to perform the method according to any one of claims 1 to 11, the method according to any one of claims 12 to 14, the method according to any one of claims 15 and 17 to 20, or the method according to any one of claims 16 to 20.
